(19) Europäisches Patentamt / European Patent Office / Office européen des brevets

(11) **EP 3 553 617 B1**

(12) **FASCICULE DE BREVET EUROPEEN**

(45) Date de publication et mention de la délivrance du brevet:
**16.02.2022 Bulletin 2022/07**

(21) Numéro de dépôt: **19163961.6**

(22) Date de dépôt: **20.03.2019**

(51) Classification Internationale des Brevets (IPC):
**G05B 23/02** *(2006.01)* **G01C 21/16** *(2006.01)*

(52) Classification Coopérative des Brevets (CPC):
**G05B 23/0221;** G01C 21/165

(54) **PROCÉDÉ ET SYSTÈME DE FUSION DE MESURES DE PARAMÈTRES DE VOL D'UN AÉRONEF**

VORRICHTUNG UND VERFAHREN ZUR FUSION VON MESSUNGEN EINES FLUGS EINES FLUGZEUG

SYSTEM AND METHOD OF FUSING MEASUREMENTS OF AIRCRAFT FLIGHT PARAMETERS

(84) Etats contractants désignés:
AL AT BE BG CH CY CZ DE DK EE ES FI FR GB GR HR HU IE IS IT LI LT LU LV MC MK MT NL NO PL PT RO RS SE SI SK SM TR

(30) Priorité: **13.04.2018 FR 1853242**

(43) Date de publication de la demande:
**16.10.2019 Bulletin 2019/42**

(73) Titulaire: **Airbus Operations S.A.S.**
**31060 Toulouse (FR)**

(72) Inventeurs:
• **BROT, Patrice**
**31520 RAMONVILLE-ST-AGNE (FR)**
• **SAPIN, Olivier**
**31300 TOULOUSE (FR)**

(74) Mandataire: **Sarraméa, Claude**
**Airbus Operations (S.A.S)**
**XIF - M0101/1**
**316, route de Bayonne**
**31060 Toulouse Cedex (FR)**

(56) Documents cités:
**FR-A1- 3 013 834**

**Description**

DOMAINE TECHNIQUE

La présente invention concerne un système et un procédé permettant de fusionner des mesures de paramètres de vol d'un aéronef.

ÉTAT DE LA TECHNIQUE

Un aéronef est usuellement équipé d'un certain nombre de capteurs permettant de mesurer des paramètres de vol décrivant son état à chaque instant. Ces paramètres de vol sont utilisés ensuite par différents systèmes. Parmi ceux-ci figurent les commandes de vol et le pilote automatique qui sont des systèmes utilisateurs importants. Il est nécessaire de s'assurer que ces systèmes utilisateurs utilisent des paramètres de vol mesurés intègres, c'est-à-dire des valeurs de paramètres de vol qui ne sont pas erronées suite à une panne quelconque. Les paramètres de vol doivent aussi être suffisamment disponibles afin que les systèmes utilisateurs ne cessent pas de fonctionner. Généralement, un capteur prend le relais d'un autre capteur lorsque ce dernier capteur tombe en panne. Ainsi, ces capteurs sont installés sur l'aéronef avec un certain niveau de redondance, afin d'assurer l'intégrité et la disponibilité des systèmes utilisateurs. De manière générale, un système avionique reçoit des mesures d'un même paramètre provenant de plusieurs capteurs redondants. Lorsque ces mesures diffèrent, le système avionique effectue une fusion de données afin d'estimer le paramètre avec le plus faible risque d'erreur. Cette fusion de données correspond, par exemple, à une moyenne ou une médiane des mesures en question.
Le document US 2015/0148997 décrit un procédé de fusion de données. Toutefois, seules des données d'un même paramètre de vol sont traitées dans ce procédé.
L'invention porte donc sur une méthode de fusion de données applicable à tous les paramètres de vol de l'aéronef, et à destination de tous systèmes utilisateurs.

EXPOSÉ DE L'INVENTION

La présente invention a pour objet de pallier ces inconvénients en proposant un procédé et un système de fusion de données.
À cet effet, l'invention concerne un procédé de fusion de mesures de paramètres de vol d'un aéronef selon la revendication 1 ou la revendication 2.
Ainsi, le procédé de fusion correspond à un procédé générique de fusion de données permettant la vérification de la validité des mesures de tous les paramètres de vol, afin que des mesures de paramètres de vol consolidées soient transmises aux systèmes utilisateurs.
Selon une particularité, la première étape d'attribution comprend les sous-étapes suivantes, chacune des sous-étapes suivantes étant mise en œuvre pour chacune des équations :

- une première sous-étape de calcul, mise en œuvre par un premier sous-module de calcul, consistant à calculer une valeur absolue d'un résultat de l'équation sans second membre à partir de la ou des mesures du ou des paramètres de vol intervenant dans l'équation, l'équation sans second membre se présentant sous la forme $f(x_1, \cdots, x_i \cdots, x_n) = 0$ dans laquelle $x_1, \cdots, x_i, \cdots, x_n$ correspondent à des mesures de paramètres de vol et $f$ correspond à une fonction liant les mesures de paramètres de vol ;
- une sous-étape de comparaison, mise en œuvre par un sous-module de comparaison, consistant à comparer la valeur absolue du résultat avec au moins une valeur seuil prédéterminée ;
- une première sous-étape d'attribution, mise en œuvre par un premier sous-module d'attribution, consistant à attribuer la première note de validité à l'équation à partir de la comparaison de la valeur absolue du résultat avec la ou les valeurs seuil prédéterminées.

Selon une première variante, la valeur absolue du résultat est comparée dans la sous-étape de comparaison avec une valeur seuil prédéterminée,

- la première note de validité attribuée est égale à 1 si la valeur absolue du résultat est inférieure à la valeur seuil prédéterminée,
- la première note de validité attribuée est égale à 0 si la valeur absolue du résultat est supérieure ou égale à la valeur seuil prédéterminée.

Selon une deuxième variante, la valeur absolue du résultat est comparée dans la sous-étape de comparaison avec une première valeur seuil prédéterminée et une deuxième valeur seuil prédéterminée, la première valeur seuil prédéterminée étant inférieure à la deuxième valeur seuil prédéterminée,

la première note de validité attribuée étant égale à 1, si la valeur absolue du résultat est inférieure à la première valeur seuil prédéterminée,

la première note de validité attribuée étant égale à 0, si la valeur absolue du résultat est supérieure ou égale à la deuxième valeur seuil,

la première note de validité attribuée étant supérieure à 0 et inférieure à 1 en suivant une fonction monotone décroissante de 1 à 0 au fur et à mesure que la valeur absolue du résultat augmente, si la valeur absolue du résultat est supérieure ou égale à la première valeur seuil prédéterminée et si la valeur absolue du résultat est inférieure à la deuxième valeur seuil prédéterminée.

Selon une autre particularité, la première étape d'attribution comprend :

- une deuxième sous-étape de calcul, mise en œuvre par un deuxième sous-module de calcul, consistant à calculer une valeur statistique à partir d'une méthode de classification, de la ou des équations et de la ou des mesures du ou des paramètres de vol,
- une deuxième sous-étape d'attribution, mise en œuvre par un deuxième sous-module d'attribution, consistant à attribuer la première note de validité en tenant compte de la valeur statistique.

Selon une première variante d'un premier mode de réalisation, la deuxième note de validité attribuée à la troisième sous-étape d'attribution est égale à 1 si l'équation ou toutes les équations identifiées dans la première sous-étape d'identification ont une première note de validité attribuée égale à 1. La deuxième note de validité attribuée à la troisième sous-étape d'attribution est égale à 0 si au moins une des équations identifiées dans la première sous-étape d'identification a une première note de validité différente de 1.

Selon une deuxième variante du premier mode de réalisation, la deuxième note de validité attribuée à la troisième sous-étape d'attribution est égale à un résultat d'une combinaison par un opérateur flou « ET » de la ou des premières notes de validité de la ou des équations identifiées dans la première sous-étape d'identification.

Selon une première variante d'un deuxième mode de réalisation, la deuxième note de validité attribuée à la quatrième sous-étape d'attribution est égale à 1 pour le ou les scénarios de panne faisant intervenir le ou les modules d'acquisition configurés pour acquérir la ou les mesures du ou des paramètres de vol liés par la ou les équations identifiées dans la deuxième sous-étape d'identification, si la ou les premières équations identifiées dans la deuxième sous-étape (E33) d'identification ont une première note de validité attribuée égale à 1 et si la ou les deuxièmes équations identifiées dans la deuxième sous-étape (E33) d'identification ont une première note de validité attribuée égale à 0. La deuxième note de validité attribuée à la quatrième sous-étape d'attribution est égale à 0 pour le ou les scénarios de panne faisant intervenir le ou les modules d'acquisition configurés pour acquérir la ou les mesures du ou des paramètres de vol liés par la ou les équations qui ne sont pas identifiées dans la deuxième sous-étape d'identification.

Selon une deuxième variante du deuxième mode de réalisation, le ou les scénarios de panne faisant intervenir un ou des modules d'acquisition configurés pour acquérir la ou les mesures du ou des paramètres de vol liés par la ou les premières équations identifiées dans la deuxième sous-étape d'identification, la deuxième note de validité est égale à un résultat d'une combinaison par un opérateur flou « ET » de la ou des premières notes de validité attribuées à la ou aux premières équations liant les paramètres de vol, et en ce que, pour le ou les scénarios de panne ne faisant intervenir aucun des modules d'acquisition configurés pour acquérir la ou les mesures du ou des paramètres de vol liés par la ou les équations identifiées dans la deuxième sous-étape d'identification, la deuxième note de validité est égale à 0.

De plus, selon une première variante, l'étape de détermination comprend les sous-étapes suivantes, chacune des sous-étapes suivantes étant mise en œuvre pour chacune des mesures du ou des paramètres de vol :

- une troisième sous-étape d'identification, mise en œuvre par un troisième sous-module d'identification, consistant à identifier le ou les scénarios de panne faisant intervenir le module d'acquisition configuré pour acquérir la mesure de paramètre de vol, dont la deuxième note de validité attribuée est égale à 1,
- une première sous-étape de détermination, mise en œuvre par un premier sous-module de détermination, consistant à déterminer la validité de la mesure de paramètre de vol à partir du ou des scénarios de panne identifiés dans la troisième sous-étape d'identification, la mesure de paramètre de vol étant valide s'il existe au moins un scénario de panne dont la deuxième note de validité attribuée est égale à 1, sinon la mesure de paramètre de vol n'est pas valide.

En outre, selon une deuxième variante, l'étape de détermination comprend une deuxième sous-étape de détermination, mise en œuvre par un deuxième sous-module de détermination pour chacune des mesures du ou des paramètres de vol, consistant à déterminer la validité de la mesure de paramètre de vol, la validité de la mesure de paramètre de vol étant égale à un résultat d'une combinaison par un opérateur flou « OU » des deuxièmes notes de validité attribuées aux scénarios de panne faisant intervenir le module d'acquisition configuré pour acquérir la mesure de paramètre de vol.

L'invention concerne également un système de fusion de mesures de paramètres de vol d'un aéronef selon la revendication 13 ou la revendication 14.

L'invention concerne aussi un aéronef, en particulier un avion de transport qui comporte un système de fusion de mesures de paramètres de vol, tel que celui décrit ci-dessus.

## BRÈVE DESCRIPTION DES FIGURES

L'invention, avec ses caractéristiques et avantages, ressortira plus clairement à la lecture de la description faite en référence aux dessins annexés dans lesquels :

- la figure 1 représente au moins un mode de réalisation du système de fusion de mesures de paramètres de vol,

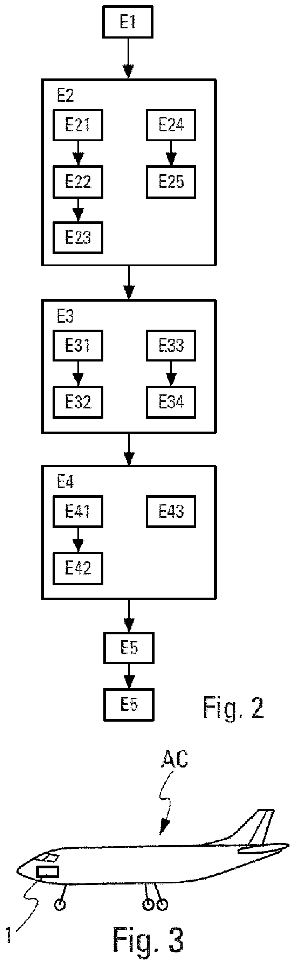

- la figure 2 représente au moins un mode de réalisation du procédé de fusion de mesures de paramètres de vol,
- la figure 3 représente un aéronef embarquant le système de fusion de mesures de paramètres de vol.

## DESCRIPTION DÉTAILLÉE

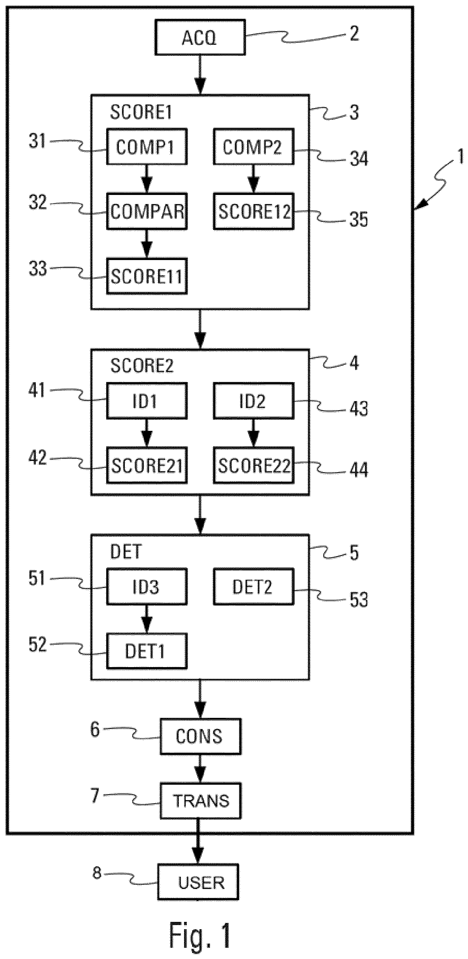

Le système de fusion de mesures de paramètres de vol 1 d'un aéronef AC, appelé dans la suite de la description « système de fusion » est représenté sur la figure 1.

Les mesures de paramètres de vol sont liés entre elles par au moins une équation sans second membre. Une équation sans second membre se présente sous la forme $f(x_1,\cdots,x_i,\cdots,x_n) = 0$ dans laquelle $x_1,\cdots x_i,\cdots,x_n$ correspondent à des mesures de paramètres de vol et $f$ correspond à une fonction liant les mesures de paramètres de vol. Dans cet exemple, l'équation lie entre elles n mesures de paramètres de vol identiques ou non identiques provenant de capteurs dissimilaires ou non dissimilaires.

Un même paramètre de vol mesuré par des capteurs dissimilaires signifie qu'un même paramètre de vol peut être mesuré par des capteurs qui mettent en œuvre des technologies utilisant des principes physiques différents ou des intégrations différentes. Un paramètre de vol peut également être estimé par des estimateurs.

Le système de fusion 1, embarqué sur l'aéronef AC, comprend au moins un module d'acquisition ACQ (ACQ pour « module for acquiring » en anglais) 2 configuré acquérir au moins une mesure de paramètres de vol. Le ou les modules d'acquisition 2 peuvent correspondre à un ou des capteurs ou à un ou des estimateurs. Dans la suite de la description, pour des raisons de concision de la description, le terme « mesure d'un paramètre » désigne aussi bien une mesure dudit paramètre au moyen d'un capteur, qu'une estimation dudit paramètre au moyen d'un estimateur.

Le système de fusion 1 comprend en outre un module d'attribution SCORE1 (SCORE pour « module for scoring » en anglais) 3 configuré pour attribuer respectivement une première note de validité (ou score de validité) à l'équation ou à chacune des équations liant les mesures du ou des paramètres de vol entre elles.

La première note de validité est déterminée en vérifiant si la ou les mesures des paramètres de vol sont la ou les solutions de la ou des équations. Autrement dit, le module d'attribution 3 vérifie si la ou les mesures des paramètres de vol sont une solution de l'équation $f(x_1,\cdots,x_i,\cdots,x_n) = 0$.

Avantageusement, le module d'attribution 3 comprend un sous-module de calcul COMP1 (COMP pour « module for computing » en anglais) 31 configuré pour calculer une valeur absolue d'un résultat de l'équation à partir de la ou des mesures de paramètres de vol intervenant dans l'équation. Autrement dit, le sous-module de calcul 31 calcule la valeur absolue du résultat de la fonction $f(x_1,\cdots,x_i,\cdots,x_n)$ dans laquelle sont intégrées les mesures correspondant aux paramètres de vol $x_1,\cdots,x_i,\cdots,x_n$ liés dans la fonction.

Le module d'attribution 3 comprend également :

- un sous-module de comparaison COMPAR (COMPAR pour « module for comparing » en anglais) 32 configuré pour comparer la valeur absolue du résultat avec au moins une valeur seuil prédéterminée,
- un sous-module d'attribution SCORE11 33 configuré pour attribuer la première note de validité à l'équation à partir de la comparaison de la valeur absolue du résultat avec la ou les valeurs seuil prédéterminées.

Chacun des sous-modules du module d'attribution 3 est mis en œuvre pour chacune des équations.

Selon une première variante, l'attribution de la première note de validité par le module d'attribution 3 suit une logique booléenne. Dans cette première variante, la valeur absolue du résultat est comparée avec une valeur seuil prédéterminée par le sous-module de comparaison 32. La première note de validité attribuée par le sous-module d'attribution 33 est égale à 1 (ou VRAI), si la valeur absolue du résultat est inférieure à la valeur seuil prédéterminée. La première note de validité attribuée est égale à 0 (ou FAUX), si la valeur absolue du résultat est supérieure ou égale à la valeur seuil prédéterminée.

Selon une deuxième variante, l'attribution de la première note de validité par le module d'attribution 3 suit une logique floue. Dans cette deuxième variante, la valeur absolue du résultat est comparée avec une première valeur seuil prédéterminée et une deuxième valeur seuil prédéterminée. La première valeur seuil prédéterminée est inférieure à la deuxième valeur seuil prédéterminée. La première note de validité attribuée par le sous-module d'attribution 33 est égale à 1, si la valeur absolue du résultat est inférieure à la première valeur seuil prédéterminée. La première note de validité attribuée est égale à 0, si la valeur absolue du résultat est supérieure ou égale à la deuxième valeur seuil. La première note de validité attribuée est supérieure à 0 et inférieure à 1, si la valeur absolue du résultat est supérieure ou égale à la première valeur seuil prédéterminée et si la valeur absolue du résultat est inférieure à la deuxième valeur seuil prédéterminée, la première note de validité attribuée est supérieure à 0 et inférieure à 1 en suivant une fonction monotone décroissante de 1 à 0 au fur et à mesure que la valeur absolue du résultat augmente.

Par exemple, la fonction monotone décroissante correspond à une fonction linéaire décroissante de 1 à 0.

De manière avantageuse, si une mesure n'est pas disponible, la première note de validité attribuée est égale à 0 pour la ou aux équations liant le paramètre de vol dont on veut ladite mesure.

Selon une variante, le module d'attribution 3 comprend également :

- un sous-module de calcul COMP2 34 configuré pour calculer une valeur statistique à partir d'une méthode de classification, de la ou des équations et de la ou des mesures des paramètres de vol,
- un sous-module d'attribution SCORE12 35 configuré pour attribuer la première note de validité en tenant compte de la valeur statistique.

L'utilisation d'une méthode de classification permet de tenir compte des caractéristiques statistiques des mesures entrant en jeu dans la ou les équations à vérifier et des erreurs connues des modèles éventuels utilisés.

Par exemple, la méthode de classification peut correspondre à un test statistique paramétrique ou non paramétrique, un filtrage passe-bas ou un filtrage passe-haut préalable, un test du $\chi^2$ sur une fenêtre glissante. Le seuil prédéterminé s'applique alors sur le résultat du test.

Quand la méthode de classification est un test du $\chi^2$, la valeur statistique correspond à

$$\chi 2 = F_{(t=1)}^2 + F_{(t=2)}^2 + F_{(t=3)}^2 + \cdots + F_{(t=n)}^2$$ , où F correspond au résultat de l'équation à différents instants t. Le résultat F devrait être nul à chaque instant t. Le test du $\chi^2$ peut être appliqué sur le résultat brut de l'équation ou sur le résultat filtré, par exemple, par un filtre passe-bas.

Le système de fusion comprend en outre un module d'attribution SCORE2 4 configuré pour attribuer respectivement une deuxième note de validité (ou score de validité) à un ou plusieurs scénarios de panne. Chacun des scénarios de panne fait intervenir un ou des modules d'acquisition 2. Un scénario de panne correspond à une combinaison de modules d'acquisition 2 en panne et/ou de modules d'acquisition 2 fournissant des mesures non erronées.

On peut donner comme exemple de scénarios de panne, les scénarios suivants : aucune panne des modules d'acquisition 2, panne de plusieurs modules d'acquisition 2 individuellement, panne cohérente de plusieurs modules d'acquisition 2 dont les mesures sont dépendantes entre elles, panne non cohérente de plusieurs modules d'acquisition 2.

La deuxième note de validité pour un scénario de panne considéré est déterminée à partir de la ou des premières notes de validité attribuées à la ou aux équations liant les paramètres de vol dont la ou les mesures sont acquises par le ou les modules d'acquisition 2 intervenant respectivement dans le scénario de panne considéré.

Selon un premier mode de réalisation, le module d'attribution 4 comprend un sous-module d'identification ID1 (ID pour « module for identifying » en anglais) 41 configuré pour identifier, parmi la ou les équations, la ou les équations liant les mesures de paramètres de vol acquises par le ou les modules d'acquisition 2 intervenant dans le scénario de panne. De plus, le ou les modules d'acquisition 2 identifiés par le sous-module d'identification 41 correspondent au(x) module(s) d'acquisition 2 dont le scénario de panne suppose que le ou les modules d'acquisition 2 fournissent des mesures non erronées. Le module d'attribution 4 comprend également un sous-module d'attribution SCORE21 42 configuré pour attribuer la deuxième note de validité en fonction de la première note de validité de la ou des équations identifiées par le sous-module d'identification 41. Chacun des sous-modules du module d'attribution 4 est mis en œuvre pour chacun des scénarios de panne.

Selon une première variante du premier mode de réalisation, l'attribution de la deuxième note de validité par le module d'attribution 4 suit une logique booléenne. Dans cette première variante, la deuxième note de validité attribuée par le sous-module d'attribution 42 est égale à 1, si l'équation ou toutes les équations identifiées dans la première sous-étape d'identification ont une première note de validité attribuée égale à 1. La deuxième note de validité attribuée par le sous-module d'attribution 42 est égale à 0, si au moins une des équations identifiées par le sous-module d'identification 41 a une première note de validité différente de 1.

Selon une deuxième variante du premier mode de réalisation, l'attribution de la deuxième note de validité par le module d'attribution 4 suit une logique floue à base de combinaison par un opérateur flou « ET » (ou « AND » en anglais) des premières notes de validité. Tout type de règle floue peut être utilisé, telle qu'une règle probabiliste, la règle de Lukasiewicz ou la règle de Zadeh. De préférence, la règle de Zadeh est utilisée. Ainsi, si la règle de Zadeh est choisie, la deuxième note de validité attribuée par le sous-module d'attribution 42 est égale à la valeur minimale de la ou des premières notes de validité de la ou des équations identifiées par le sous-module d'identification 41.

Selon un deuxième mode de réalisation, le module d'attribution 4 comprend un sous-module d'identification ID2 43 configuré pour identifier, parmi les équations, une ou des premières équations liant les mesures de paramètres de vol acquises par le ou les modules d'acquisition intervenant dans le scénario de panne et dont le scénario de panne suppose que le ou les modules d'acquisition fournissent des mesures non-erronées, ainsi que une ou des deuxièmes équations liant les mesures de paramètres de vol acquises par le ou les modules d'acquisition intervenant dans le scénario de panne et dont le scénario de panne suppose que le ou les modules d'acquisition fournissent des mesures erronées.

Le module d'attribution comprend également un sous-module d'attribution SCORE22 44 configuré pour attribuer la deuxième note de validité à chacun des scénarios de panne à partir de la ou des équations identifiées par le sous-module d'identification 43.

Selon une première variante du deuxième mode de réalisation, l'attribution de la deuxième note de validité par le module d'attribution 4 suit une logique booléenne. Dans cette première variante, la deuxième note de validité attribuée par le sous-module d'attribution 44 est égale à 1 pour le ou les scénarios de panne faisant intervenir le ou les modules d'acquisition 2 configurés pour acquérir la ou les mesures de paramètres de vol liées par la ou les équations identifiées par le sous-module d'identification 43, si la ou les premières équations identifiées par le sous-module d'identification 43 ont une première note de validité attribuée égale à 1 et si les deuxièmes équations identifiées par le sous-module d'identification 43 ont une première note de validité attribuée égale à 0.

La deuxième note de validité attribuée par le sous-module d'attribution 44 est égale à 0 pour le ou les scénarios de panne faisant intervenir le ou les modules d'acquisition 2 configurés pour acquérir la ou les mesures de paramètres de vol liées par la ou les équations qui ne sont pas identifiées par le sous-module d'identification 43.

Selon une deuxième variante du deuxième mode de réalisation, de la même manière que la deuxième variante du premier mode de réalisation, l'attribution de la deuxième note de validité par le module d'attribution 4 suit une logique floue à base de combinaison par un opérateur flou « ET » des premières notes de validité attribuées à la ou aux premières équations liant les paramètres de vol. Tout type de règle floue peut être utilisé, telle qu'une règle probabiliste, la règle de Lukasiewicz ou la règle de Zadeh. De préférence, la règle de Zadeh est utilisée. Ainsi, si la règle de Zadeh est choisie, la deuxième note de validité est égale à la valeur minimale de la ou des premières notes de validité attribuées par le sous-module d'attribution 33 ou 35 à la ou aux premières équations liant les paramètres de vol, pour le ou les scénarios de panne faisant intervenir un ou des modules d'acquisition 2 configurés pour acquérir la ou les mesures de paramètres de vol liées par la ou les premières équations identifiées par le sous-module d'identification 43.

La deuxième note de validité est égale à 0, pour le ou les scénarios de panne ne faisant intervenir aucun des modules d'acquisition 2 configurés pour acquérir la ou les mesures de paramètres de vol liées par la ou les premières équations identifiées par le sous-module d'identification 43.

Pour les deux modes de réalisation, lorsque deux mesures fournies par des modules d'acquisitions 2 non dissimilaires sont erronées en même temps, la deuxième note de validité peut être obtenue par une combinaison supplémentaire de toutes les premières notes de validité attribuées aux équations liant les paramètres de vol dont les mesures sont erronées.

Selon une autre variante, il est possible de différencier deux scénarios l'un de l'autre quand un scénario suppose plusieurs mesures identiquement erronées alors que l'autre scénario suppose les mêmes mesures différemment erronées. La différentiation de la deuxième note entre les deux scénarios s'obtient en prenant en compte la ou les équations reliant les mesures erronées. Pour le scénario supposant plusieurs mesures identiquement erronées, la troisième note est égale à 1 si les premières notes des équations reliant ces mesures erronées sont égales à 1. La troisième note est égale à 0 si les premières notes des équations reliant ces mesures erronées sont égales à 0.

Le système de fusion 1 comprend également un module de détermination DET 5 configuré pour déterminer la validité de la ou des mesures de paramètres de vol à partir de la ou des deuxièmes notes de validité.

Selon une première variante, le module de détermination 5 suit une logique booléenne. Dans cette première variante, le module de détermination 5 comprend les sous-modules suivants :

- un sous-module d'identification ID3 51 configuré pour identifier le ou les scénarios de panne faisant intervenir le module d'acquisition 2 configuré pour acquérir la mesure de paramètre de vol, dont la deuxième note de validité attribuée est égale à 1,
- un sous-module de détermination DET1 52 configuré pour déterminer la validité de la mesure de paramètre de vol à partir du ou des scénarios de panne identifiés par le sous-module d'identification 51.

La mesure de paramètre de vol est valide s'il existe au moins un scénario de panne dont la deuxième note de validité attribuée par le module d'attribution 4 est égale à 1, sinon la mesure de paramètre de vol n'est pas valide.

Chacun des sous-modules du module de détermination 5 est mis en œuvre pour chacune des mesures de paramètres de vol.

Selon une deuxième variante, le module de détermination 5 suit une logique floue à base de relations « OU » (ou « OR » en anglais). Tout type de règle floue peut être utilisé, telle qu'une règle probabiliste, la règle de Lukasiewicz ou la règle de Zadeh. De préférence, la règle de Zadeh est utilisée. Ainsi, le module de détermination 5 comprend un sous-module de détermination DET2 53 configuré pour déterminer la validité de la mesure de paramètres de vol. La validité de la mesure de paramètres de vol est égale à une valeur maximale des deuxièmes notes de validité attribuées aux scénarios de panne faisant intervenir le module d'acquisition 2 configuré pour acquérir la mesure de paramètre de vol. Le sous-module de détermination 53 est mis en œuvre pour chacune des mesures de paramètres de vol. Dans cette variante, la validité peut être considérée comme une troisième note de validité, comprise entre 0 et 1, attribuée à chacune des mesures de paramètres de vol.

Le système de fusion 1 comprend également un module de consolidation CONS (CONS « module for consolidating » en anglais) 6 configuré pour consolider les mesures de paramètres de vol.

La consolidation des mesures signifie la prise en compte des mesures de paramètres de vol à disposition en fonction de la validité desdites mesures déterminée par le module de détermination 5.

Il peut s'agir d'un aiguillage simple en fonction de la validité des mesures. Par exemple, une première mesure est retenue si cette première mesure est valide, sinon, une deuxième mesure est retenue si cette deuxième mesure est valide, sinon une troisième mesure est retenue, etc.

Si le module de consolidation 6 suit une logique floue (deuxième variante), le module de consolidation 6 est configuré pour calculer une moyenne pondérée. Cette pondération est obtenue à partir des troisièmes notes de validité de chacune des mesures de paramètres de vol en tenant compte de toutes les combinaisons possibles.

À titre d'exemple, on considère un paramètre de vol dont les mesures M1, M2, M3, ayant pour troisième note de validation $\alpha_1$, $\alpha_2$, $\alpha_3$, sont fournies à partir de trois modules d'acquisition 2.

On définit huit pondérations $\beta_1$, $\beta_2$, $\beta_3$, $\beta_4$, $\beta_5$, $\beta_6$, $\beta_7$, $\beta_8$ de la manière suivante :

$$\beta_1 = \alpha_1 \times \alpha_2 \times \alpha_3,$$

$$\beta_2 = \alpha_1 \times \alpha_2 \times (1 - \alpha_3),$$

$$\beta_3 = \alpha_1 \times (1 - \alpha_2) \times \alpha_3,$$

$$\beta_4 = (1 - \alpha_1) \times \alpha_2 \times \alpha_3,$$

$$\beta_5 = \alpha_1 \times (1 - \alpha_2) \times (1 - \alpha_3),$$

$$\beta_6 = (1 - \alpha_1) \times \alpha_2 \times (1 - \alpha_3),$$

$$\beta_7 = (1 - \alpha_1) \times (1 - \alpha_2) \times \alpha_3,$$

$$\beta_8 = (1 - \alpha_1) \times (1 - \alpha_2) \times (1 - \alpha_3).$$

$\beta_1$ met en évidence que les trois mesures M1, M2, M3 sont valides.

$\beta_2$ met en évidence que seules les mesures M1 et M2 sont valides.

$\beta_3$ met en évidence que seules les mesures M1 et M3 sont valides.

$\beta_4$ met en évidence que seules les mesures M2 et M3 sont valides.

$\beta_5$ met en évidence que seule la mesure M1 est valide.

$\beta_6$ met en évidence que seule la mesure M2 est valide.

$\beta_7$ met en évidence que seule la mesure M3 est valide.

$\beta_8$ met en évidence qu'aucune mesure n'est valide.

On peut remarquer que $\Sigma_i \beta_i = 1$.

Pour chaque pondération, le module de consolidation 6 définit une donnée consolidée préétablie $c_i$, telle que la médiane des trois mesures lorsqu'elles sont toutes valides, la moyenne de deux mesures quand celles-ci sont valides, etc.

Le module de consolidation 6 calcule ainsi la mesure du paramètre de vol consolidée par la relation $\Sigma_i \beta_i \times c_i$.

Selon une autre variante, le module de consolidation 6 peut consolider les mesures de paramètres de vol à partir de la deuxième note de validité. Dans cette variante, la donnée consolidée préétablie est prédéterminée empiriquement pour chacun des scénarios de panne. La moyenne pondérée de consolidation est alors la combinaison des données consolidées préétablies pour chacun des scénarios de panne pondérées par la deuxième note de validité. Dans cette variante, il peut être nécessaire de veiller à ce que la somme des deuxièmes notes de validité soit toujours égale à 1.

Avantageusement, lorsque la troisième note de validité d'une mesure est égale à 0 pendant un temps prédéterminé, la mesure est verrouillée à un statut invalide. La troisième note de validité restera bloquée à 0 ainsi que toutes les équations associées, même si la panne du module d'acquisition 2 qui fournit la mesure semble disparaître. Toutefois, il est possible que le statut de la mesure soit déverrouillée, s'il y a un retour à une cohérence des mesures au bout d'un temps prédéterminé.

Le système de fusion 1 comprend également un module de transmission TRANS (TRANS pour « module for transmitting » en anglais) 7 configuré pour transmettre la ou les mesures consolidées de paramètres de vol à un dispositif utilisateur 8.

Le dispositif utilisateur 8 peut comprendre les commandes de vol ou le pilote automatique de l'aéronef AC.

L'invention concerne également un procédé de fusion de mesures de paramètres de vol d'un aéronef.

Le procédé de fusion comprend les étapes suivantes :

- une étape E1 d'acquisition, mise en œuvre par le ou les modules d'acquisition 2, consistant à acquérir au moins une mesure de paramètres de vol ;
- une étape E2 d'attribution, mise en œuvre par le module d'attribution 3, consistant à attribuer respectivement une première note de validité à l'équation ou à chacune des équations liant les mesures des paramètres de vol entre elles, la première note de validité étant déterminée en vérifiant si la ou les mesures du ou des paramètres de vol sont une ou des solutions de la ou des équations ;
- une étape E3 d'attribution, mise en œuvre par le module d'attribution 4, consistant à attribuer respectivement une deuxième note de validité à un ou plusieurs scénarios de panne, chacun des scénarios de panne faisant intervenir un ou des modules d'acquisition 2, la deuxième note de validité pour un scénario de panne considéré étant déterminée à partir de la ou des premières notes de validité attribuées à la ou aux équations liant les mesures des paramètres de vol acquises par le ou les modules d'acquisition 2 intervenant respectivement dans le scénario de panne considéré ;
- une étape E4 de détermination, mise en œuvre par le module de détermination 5, consistant à déterminer la validité de la ou des mesures du ou des paramètres de vol à partir de la ou des deuxièmes notes de validité ;
- une étape E5 de consolidation, mise en œuvre par le module de consolidation 6, consistant à consolider les mesures du ou des paramètres de vol en fonction de la validité des mesures déterminée à l'étape E4 de détermination ;
- une étape E6 de transmission, mise en œuvre par le module de transmission 7, consistant à transmettre la ou les mesures consolidées du ou des paramètres de vol au dispositif utilisateur 8.

L'étape E2 d'attribution peut comprendre les sous-étapes suivantes, chacune des sous-étapes suivantes étant mise en œuvre pour chacune des équations :

- une sous-étape E11 de calcul, mise en œuvre par le sous-module de calcul 31, consistant à calculer une valeur absolue d'un résultat de l'équation sans second membre à partir de la ou des mesures du ou des paramètres de vol intervenant dans l'équation ;
- une sous-étape E12 de comparaison, mise en œuvre par le sous-module de comparaison 32, consistant à comparer la valeur absolue du résultat avec au moins une valeur seuil prédéterminée ;

- une sous-étape E13 d'attribution, mise en œuvre par le sous-module d'attribution 33, consistant à attribuer la première note de validité à l'équation à partir de la comparaison de la valeur absolue du résultat avec la ou les valeurs seuil prédéterminées.

Selon une variante, l'étape E2 d'attribution peut comprendre :

- une sous-étape E14 de calcul, mise en œuvre par le sous-module de calcul 34, consistant à calculer une valeur statistique à partir d'une méthode de classification, de la ou des équations et de la ou des mesures du ou des paramètres de vol,
- une sous-étape E15 d'attribution, mise en œuvre par le sous-module d'attribution 35, consistant à attribuer la première note de validité en tenant compte de la valeur statistique.

Selon le premier mode de réalisation, l'étape E3 d'attribution peut comprendre les sous-étapes suivantes, chacune des sous-étapes suivantes étant mise en œuvre pour chacun des scénarios de panne :

- une sous-étape E31 d'identification, mise en œuvre par le sous-module d'identification 41, consistant à identifier, parmi la ou les équations, la ou les équations liant les mesures de paramètres de vol acquises par le ou les modules d'acquisition 2 intervenant dans le scénario de panne, le ou les modules d'acquisition 2 identifiés correspondant en outre au ou aux modules d'acquisition 2 dont le scénario de panne suppose que le ou les modules d'acquisition 2 fournissent des mesures non erronées,
- une sous-étape E32 d'attribution, mise en œuvre par le sous-module d'attribution 42, consistant à attribuer la deuxième note de validité en fonction de la première note de validité de la ou des équations identifiées dans la sous-étape E31 d'identification.

Selon le deuxième mode de réalisation, l'étape E3 d'attribution comprend les sous-étapes suivantes :

- une sous-étape E33 d'identification, mise en œuvre par le sous-module d'identification 43, consistant à identifier, parmi les équations, une ou des premières équations liant les mesures de paramètres de vol acquises par le ou les modules d'acquisition intervenant dans le scénario de panne, le ou les modules d'acquisition 2 identifiés correspondant en outre au ou aux modules d'acquisition 2 dont le scénario de panne suppose que le ou les modules d'acquisition fournissent des mesures non-erronées, ainsi que une ou des deuxièmes équations liant les mesures de paramètres de vol acquises par le ou les modules d'acquisition intervenant dans le scénario de panne et dont le scénario de panne suppose que le ou les modules d'acquisition fournissent des mesures erronées,
- une sous-étape E34 d'attribution, mise en œuvre par le sous-module d'attribution 44, consistant à attribuer la deuxième note de validité à chacun des scénarios de panne à partir de la ou des équations identifiées dans la sous-étape E33 d'identification.

Selon une première variante, l'étape E4 de détermination comprend les sous-étapes suivantes, chacune des sous-étapes suivantes étant mise en œuvre pour chacune des mesures du ou des paramètres de vol :

- une sous-étape E41 d'identification, mise en œuvre par le sous-module d'identification 51, consistant à identifier le ou les scénarios de panne faisant intervenir le module d'acquisition 2 configuré pour acquérir la mesure de paramètre de vol, dont la deuxième note de validité attribuée est égale à 1,
- une sous-étape E42 de détermination, mise en œuvre par le sous-module de détermination 52, consistant à déterminer la validité de la mesure de paramètre de vol à partir du ou des scénarios de panne identifiés dans la sous-étape E41 d'identification, la mesure de paramètre de vol étant valide s'il existe au moins un scénario de panne dont la deuxième note de validité attribuée est égale à 1, sinon la mesure de paramètre de vol n'est pas valide.

Selon une deuxième variante, l'étape E4 de détermination comprend une sous-étape E43 de détermination, mise en œuvre par le sous-module de détermination 53 pour chacune des mesures du ou des paramètres de vol, consistant à déterminer la validité de la mesure de paramètre de vol, la validité de la mesure de paramètre de vol étant égale à une valeur maximale des deuxièmes notes de validité attribuées aux scénarios de panne faisant intervenir le module d'acquisition 2 configuré pour acquérir la mesure de paramètre de vol.
Dans la suite de la description, le système de fusion 1 est appliqué à trois exemples différents.

Exemple 1

Soient quatre mesures d'un paramètre de vol correspondant à une vitesse anémométrique, issues de quatre modules d'acquisition 2: trois mesures issues d'une même technologie de mesure par trois unités de référence anémobarométrique (ADR pour « Air Data Reference » en anglais) : $A_1$, $A_2$ et $A_3$ et une mesure estimation dissimilaire fournie par un estimateur de secours B (« backup estimator » en anglais).

Les équations liant ces mesures du paramètre de vol sont les suivantes :

$$A_1 - A_2 = 0 \quad (A12)$$

$$A_1 - A_3 = 0 \quad (A13)$$

$$A_2 - A_3 = 0 \quad (A23)$$

$$A_1 - B = 0 \quad (B1)$$

$$A_2 - B = 0 \quad (B2)$$

$$A_3 - B = 0 \quad (B3)$$

Les grandeurs entre parenthèses correspondent aux premières notes de validité attribuées aux équations.

Les scénarios de panne considérés sont :

- Tout est valide (TV)
- A1 est erroné (A1S)
- A2 est erroné (A2S)
- A3 est erroné (A3S)
- B est erroné (BS)
- A1 et A2 sont identiquement et simultanément erronés (C12)
- A2 et A3 sont identiquement et simultanément erronés (C23)
- A1 et A3 sont identiquement et simultanément erronés (C13)
- A1 et A2 sont erronées différemment (D12)
- A2 et A3 sont erronées différemment (D23)
- A1 et A3 sont erronées différemment (D13)
- A1 et B sont erronés différemment (D1B)
- A2 et B sont erronés différemment (D2B)
- A3 et B sont erronés différemment (D3B)

Les deuxièmes notes de validité des scénarios de panne sont les suivants :

Score(TV) = MIN(A12, A13, A23, B1, B2, B3)

Score(A1S) = MIN(A23, B2, B3)

Score(A2S) = MIN(A13, B1, B3)

Score(A3S) = MIN(A12, B1, B2)

Score(BS) = MIN(A12, A13, A23)

Score(C12) = MIN(A12, B3)

Score(C23) = MIN(A23, B1)

Score(C13) = MIN(A13, B2)

Score(D12) = MIN($\underline{A12}$, B3), où $\underline{A12}$ = 1 - A12

Score(D23) = MIN($\underline{A23}$, B1), où $\underline{A23}$ = 1 - A23

Score(D13) = MIN($\underline{A13}$, B2), où $\underline{A13}$ = 1 - A13

Score(D1B) = MIN(A23, $\underline{B1)}$, où $\underline{B1}$ = 1 - B1

Score(D2B) = MIN(A13, $\underline{B2)}$, où $\underline{B2}$ = 1 - B2

Score(D3B) = MIN(A12, $\underline{B3)}$, où $\underline{B3}$ = 1 - B3

Soient $a_1$, $a_2$, $a_3$ et b les troisièmes notes de validité des mesures à définir.
Celles-ci valent :

$a_1$ = MAX(TV, A2S, A3S, BS, C23, D23, D2B, D3B)

$a_2$ = MAX(TV, A1S, A3S, BS, C13, D13, D1B, D3B)

$a_3$ = MAX(TV, A1S, A2S, BS, C12, D12, D1B, D2B)

b = MAX(TV, A1S, A2S, A3S, C12, D12, C13, D13, C23, D23)

Enfin, la donnée consolidée à un instant k vaut :

$$Vc(k) = a_1 \text{ x } a_2 \text{ x } a_3 \text{ x Médiane}(A_1, A_2, A_3)$$

$$+ (1 - a_1) \text{ x } a_2 \text{ x } a_3 \text{ x Moyenne}(A_2, A_3)$$

$$+ a_1 \text{ x } (1 - a_2) \text{ x } a_3 \text{ x Moyenne}(A_1, A_3)$$

$$+ a_1 \text{ x } a_2 \text{ x } (1 - a_3) \text{ x Moyenne}(A_1, A_2)$$

$$+ (1 - a_1) \text{ x } (1 - a_2) \text{ x } a_3 \text{ x b x } A_3$$

$$+ (1 - a_1) \text{ x } a_2 \text{ x } (1 - a_3) \text{ x b x } A_2$$

$$+ a_1 \text{ x } (1 - a_2) \text{ x } (1 - a_3) \text{ x b x } A_1$$

$$+ (1 - \text{somme des coefficients de pondération}) \text{ x } Vc(k-1).$$

Exemple 2

Cet exemple a pour but d'augmenter la disponibilité et l'intégrité d'une approche par point du toucher des roues (TDP pour « Touch Down Point » en anglais) de l'aéronef AC.
Pour les modules d'acquisition 2, on considère les capteurs et paramètres suivants :

- un module de géolocalisation, tel qu'un module GPS (GPS pour « Global Positioning System » en anglais) pour mesurer une position GPS,
- une centrale à inertie ou module IRS (IRS pour « Inertial Measurement System » en anglais) pour mesurer des angles de tangage, roulis et cap ainsi qu'une vitesse inertielle,
- des radioaltimètres pour mesurer une hauteur,
- une base de données de piste RDB pour acquérir les coordonnées de pistes (latitude, longitude, altitude, orientation magnétique de piste ou QFU),
- une base de données de terrain TDB (« Terrain Database » en anglais) pour acquérir des données de terrain,

- une première source CAM, telle qu'une caméra, pour acquérir une désignation du pilote d'une position (xpix, ypix) sur un écran du TDP, et un tracé de l'axe du point de toucher des roues,
- un deuxième module IRS, notée IRSB, pour mesurer les angles de tangage $\Theta$, roulis $\Phi$ et cap $\Psi$,
- une deuxième source CAM, telle qu'une caméra, notée CAMB, pour acquérir une désignation du pilote d'une position du TDP, et du tracé de l'axe du point de toucher des roues.

À part pour la base de données qui regroupe TDB et RDB, on considère, dans un premier temps, que ces modules d'acquisition 2 sont tous dissimilaires, en particulier :

- la dépendance entre les vitesses inertielles et le module GPS n'est pas prise en compte, elle est supposé faible ;
- le module IRSB est supposé suffisamment précis sans être aidé par le module GPS,
- les deux sources CAM sont dissimilaires.

De plus, on suppose que l'on ne peut pas calculer une position IRS par intégration des vitesses inertielles sans négliger la dépendance de la position initiale. On supposera donc ici que les positions mesurées par le module IRS et le module GPS ne sont pas dissimilaires.

Deux autres modules d'acquisition peuvent être utilisés :

- un télémètre pour mesurer une distance au terrain devant l'aéronef AC et la distance au point de toucher des roues,
- des algorithmes d'analyse d'image, noté IBL pour Image Base Landing, qui permettent la reconnaissance de la piste et l'évaluation de la distance à la piste.

Les modules d'acquisition 2 listés ci-dessus permettent d'acquérir des mesures des paramètres de vol suivants :

- latlongGPS : une latitude GPS $lat_{GPS}$ et une longitude GPS $long_{GPS}$,
- altGPS : une altitude GPS,
- VxyIRS : une vitesse inertielle IRS latérale,
- VzIRS : une vitesse inertielle IRS verticale,
- hRA : une hauteur issue des radioaltimètres RA,
- zDB : un profil de la base de données de terrain TDB,
- phithetaIRS et phithetaIRSB : des angles de roulis et de tangage $\Phi$ et $\Theta$ IRS et IRSB,
- psiIRS et psiIRB : des angles de cap $\Psi$ IRS et IRSB,
- angIRS et angIRSB : de tangage $\Theta$, roulis $\Phi$ et cap $\Psi$ IRS et IRSB,
- posRDB et QFURDB : une position et un QFU de la piste de la base de données RDB,
- rCAM et rCAMb : des positions du TDP sur l'écran de CAM et CAMB,
- trackCAM et trackCAMb : des tracées des axes TDP désignés par CAM et

CAMB,

- distTLM : une distance mesurée par le télémètre,
- ofCAM et ofCAMB : une sortie vidéo des caméras qui rentrent en entrée des algorithmes du flux optiques.

Les équations liant les mesures des paramètres listés ci-dessous peuvent être définies de la manière suivante.

Les équations (1.1) et (1.2) correspondent à une comparaison entre les mesures GPS et les mesures IRS.

$$(1.1) : f(\text{latlongGPS},\text{VxyIRS}) = (X_{GPS}, Y_{GPS}) - \int (V_{XIRS}, V_{YIRS}) = 0$$

dans laquelle les coordonnées GPS $(X_{GPS}, Y_{GPS})$ peuvent être définies dans un repère piste à partir des données $(lat_{GPS}, long_{GPS})$ de l'aéronef AC,

et dans laquelle les coordonnées IRS sont obtenues par intégration des vitesses inertielles $(V_{XIRS}, V_{YIRS})$ avec une initialisation GPS.

$$(1.2) : f(\text{altGPS, VzIRS}) = Z_{GPS} - \int V_{ZIRS} = 0$$

qui est une comparaison de l'altitude GPS $Z_{GPS}$ avec l'intégration de la vitesse inertielle verticale $V_ZIRS$ avec une initialisation GPS.

L'équation (2.1) correspond à l'utilisation du radioaltimètre.

$$(2.1) : f(\text{altGPS, hRA, zDB}) = Z_{GPS} - H_{RA} - Z_{TDB}(X_{GPS}, Y_{GPS}) = 0,$$

qui est une comparaison de l'altitude GPS $Z_{GPS}$ avec la somme de l'altitude du terrain $Z_{TDB}$ et de la hauteur RA $H_{RA}$ de l'aéronef AC.

Les équations (3.1) et (3.2) correspondent à une désignation du pilote.

$$(3.1) : \quad f(\text{posGPS,angIRS,rCAM, RDB}) = \begin{pmatrix} x_{pix} \\ y_{pix} \end{pmatrix}_{CAM} -$$

$$R_{IRS}\left( \begin{pmatrix} X \\ Y \\ Z \end{pmatrix}_{GPS-RDB} \right) = 0.$$

qui est une comparaison de la désignation pilote (x/z, y/z) avec la position piste de la DB en utilisant la position avion GPS et les angles IRS.

$$(3.2) : f(\text{QFUDB, trackCAM, psiIRS}) = QFU_{DB} - track_{DB} - \Psi_{IRS} = 0$$

qui est une comparaison du QFU de la piste de la base de données $QFU_{DB}$ avec le tracé $track_{DB}$ désigné par le pilote sur la source CAM en utilisant l'angle de cap IRS $\Psi_{IRS}$.

L'équation (4.1) correspond à la cohérence de la base de données RDB.

$$(4.1) : f(\text{zDB, posRDB}) = Z_{TDB}(X_{RDB}, Y_{RDB}) - Z_{RDB} = 0$$

qui est une comparaison de l'altitude de la piste avec l'altitude du terrain $Z_{TDB}$ en (X,Y) piste. Cette équation compare des mesures de paramètres qui ne sont pas indépendantes car elles viennent de la base de données. On considère donc qu'elle peut être vérifiée alors que la base de données est erronée.

Les équations (5.1), (5.2), (5.3) et (5.4) correspondent aux sources CAM et CAMB de désignation du pilote.

$$(5.1) : f(\text{rCAM, rCAMB}) = \begin{pmatrix} x_{pix} \\ y_{pix} \end{pmatrix}_{CAM} - \begin{pmatrix} x_{pix} \\ y_{pix} \end{pmatrix}_{CAMb} = 0$$

qui est une comparaison des désignations pilote (x/z, y/z) entre les deux sources CAM et CAMB.

$$(5.2) : f(\text{trackCAM, trackCAMB}) = track_{CAMb} - track_{CAM} = 0$$

qui correspond à une comparaison des tracés $track_{CAM}$ et $track_{CAMb}$ désignés par le pilote entre les deux sources CAM et CAMB.

$$(5.3): \qquad f(\text{posGPS, angIRS, rCAMB, RDB}) = \begin{pmatrix} x_{pix} \\ y_{pix} \end{pmatrix}_{CAMb} -$$

$$R_{IRS}\left(\begin{pmatrix} X \\ Y \\ Z \end{pmatrix}_{GPS-RDB}\right) = 0$$

qui correspond à une comparaison de la désignation pilote (x/z, y/z) sur la deuxième source CAMB, avec la position piste de la DB en utilisant la position GPS et les angles IRS.

$$(5.4): f(\text{QFUDB, trackCAMB, psiIRS}) = QFU_{DB} - track_{CAMB} - \Psi_{IRS} = 0$$

qui correspond à une comparaison du QFU de la piste de la base de données $QFU_{DB}$ avec le tracé *track*$_{CAMB}$ désigné par le pilote sur la source CAMB en utilisant les angles IRS $\Phi$ et $\Theta$.

Les équations (6.1) à (6.6) correspondent à une utilisation d'une deuxième Technologie IRS

$$(6.1): f(\text{phithetaIRS, phithetaIRSB}) = (\Phi, \Theta)_{IRSB} - (\Phi, \Theta)_{IRS} = 0$$

qui correspond à une comparaison des angles $\Phi$ et $\Theta$ entre le module IRS et le module IRSB.

$$(6.2): f(\text{psiIRS, psiIRSB}) = \Psi_{IRSB} - \Psi_{IRS} = 0$$

qui correspond à une comparaison de l'angle $\Psi$ entre le module IRS et le module IRSB.

$$(6.3): \qquad f(\text{posGPS, angIRSB, rCAM, RDB}) = \begin{pmatrix} x_{pix} \\ y_{pix} \end{pmatrix}_{CAM} -$$

$$R_{IRSB}\left(\begin{pmatrix} X \\ Y \\ Z \end{pmatrix}_{GPS-RDB}\right) = 0$$

qui correspond à une comparaison de la désignation pilote (x/z, y/z) sur la première source CAM, avec la position piste de la DB en utilisant la position GPS et les angles IRSB.

$$(6.4): f(\text{QFUDB, trackCAM, psiIRSB}) = QFU_{DB} - track_{CAM} - \Psi_{IRSB} = 0$$

qui correspond à une comparaison du QFU de la piste de la base de données $QFU_{DB}$ avec le tracé *track*$_{CAM}$ désigné par le pilote sur la source CAM en utilisant les angles IRSB $\Phi$ et $\Theta$.

$$(6.5): \qquad f(\text{posGPS, angIRSB, rCAMB, RDB}) = \begin{pmatrix} x_{pix} \\ y_{pix} \end{pmatrix}_{CAMb} -$$

$$R_{IRSB}\left(\begin{pmatrix} X \\ Y \\ Z \end{pmatrix}_{GPS-RDB}\right) = 0$$

qui correspond à une comparaison de la désignation pilote (x/z, y/z) sur la deuxième source CAMB, avec la position piste de la DB en utilisant la position GPS et les angles IRSB.

$$(6.6): \quad f(\text{QFUDB, trackCAMB, psiIRSB}) = QFU_{DB} - track_{CAMB} -$$

$$\Psi_{IRSB} = 0$$

qui correspond à une comparaison du QFU de la piste de la base de données $QFU_{DB}$ avec le tracé $track_{CAMB}$ désigné par le pilote sur la source CAMB en utilisant les angles IRSB $\Phi$ et $\Theta$.

Les équations (7.1) à (7.16) correspondent à des utilisations du télémètre.

La première utilisation du télémètre permet d'évaluer la distance au sol devant l'aéronef AC.

À partir des angles de l'aéronef AC et de sa vitesse IRS ou recalculée à partir de la position GPS, le télémètre permet d'évaluer la distance au sol devant l'aéronef AC et en particulier la hauteur de l'aéronef AC $H_{(TLM/(IRS\ ou\ GPS)/IRSX)}$. Cette hauteur peut être comparée à la hauteur des radioaltimètres $H_{RA}$ ou à la différence de l'altitude GPS avec l'altitude terrain, $Z_{GPS} - Z_{TDB}(X_{GPS}, Y_{GPS})$. D'où les équations suivantes :

$$(7.1): f(\text{distTLM, vIRS, angIRS, RA}) = H_{TLM/IRS} - H_{RA} = 0$$

$$(7.2): f(\text{distTLM, vIRS, angIRSB, RA}) = H_{TLM/IRS/IRSB} - H_{RA} = 0$$

$$(7.3): \quad f(\text{distTLM, vIRS, angIRS, pGPS, zTDB}) = H_{TLM/IRS} - Z_{GPS} +$$

$$Z_{TDB}(X_{GPS}, Y_{GPS}) = 0$$

$$(7.4): \ f(\text{distTLM, vIRS, angIRSB, pGPS, zTDB}) = H_{TLM/IRS/IRSB} - Z_{GPS} +$$

$$Z_{TDB}(X_{GPS}, Y_{GPS}) = 0$$

$$(7.5): f(\text{distTLM, pGPS, angIRS, RA}) = H_{TLM/GPS/IRS} - H_{RA} = 0$$

$$(7.6): f(\text{distTLM, pGPS, angIRSB, RA}) = H_{TLM/GPS/IRSB} - H_{RA} = 0$$

$$(7.7): \quad f(\text{distTLM, pGPS, angIRS, zTDB}) = H_{TLM/GPS/IRS} - Z_{GPS} +$$

$$Z_{TDB}(X_{GPS}, Y_{GPS}) = 0$$

$$(7.8): \quad f(\text{distTLM, pGPS, angIRSB, zTDB}) = H_{TLM/GPS/IRSB} - Z_{GPS} +$$

$$Z_{TDB}(X_{GPS}, Y_{GPS}) = 0$$

La deuxième utilisation du télémètre permet d'évaluer la distance entre l'aéronef AC la piste.

La distance $D_{(TLM/CAMX/GPS/IRSX)}$ mesurée par le télémètre (distTLM) dans la direction de la désignation (rCAM ou rCAMB) du TDP mise à jour en utilisant les angles IRS (angIRS ou angIRSB) et la vitesse IRS ou la position GPS (pGPS), peut être comparée avec la distance entre la position GPS (pGPS) et :

- la position de piste de la base de données (pRDB),
- ou la position du TDP obtenue en faisant l'intersection entre la désignation (rCAM ou rCAMB) et le profil terrain (zTDB) de la base de données.

Ces distances sont notées $\left\| \begin{pmatrix} X \\ Y \\ Z \end{pmatrix}_{GPS-RDB} \right\|$ et $\left\| \begin{pmatrix} X \\ Y \\ Z \end{pmatrix}_{GPS/CAMX/TDB} \right\|$.

D'où les équations suivantes :

$$(7.9): \quad f(distTLM, pGPS, angIRS, rCAM, pRDB) = D_{TLM/CAM/GPS/IRS} - \left\| \begin{pmatrix} X \\ Y \\ Z \end{pmatrix}_{GPS-RDB} \right\| = 0$$

$$(7.10): \quad f(distTLM, pGPS, angIRS, rCAM, zTDB) = D_{TLM/CAM/GPS/IRS} - \left\| \begin{pmatrix} X \\ Y \\ Z \end{pmatrix}_{GPS/CAM/TDB} \right\| = 0$$

$$(7.11): \quad f(distTLM, pGPS, angIRS, rCAMB, pRDB) = D_{TLM/CAMB/GPS/IRS} - \left\| \begin{pmatrix} X \\ Y \\ Z \end{pmatrix}_{GPS-RDB} \right\| = 0$$

$$(7.12): \quad f(distTLM, pGPS, angIRS, rCAMB, zTDB) = D_{TLM/CAMB/GPS/IRS} - \left\| \begin{pmatrix} X \\ Y \\ Z \end{pmatrix}_{GPS/CAMB/TDB} \right\| = 0$$

$$(7.13): \quad f(distTLM, pGPS, angIRSB, rCAM, pRDB) = D_{TLM/CAM/GPS/IRSB} - \left\| \begin{pmatrix} X \\ Y \\ Z \end{pmatrix}_{GPS-RDB} \right\| = 0$$

$$(7.14): \quad f(distTLM, pGPS, angIRSB, rCAM, zTDB) = D_{TLM/CAM/GPS/IRSB} - \left\| \begin{pmatrix} X \\ Y \\ Z \end{pmatrix}_{GPS/CAM/TDB} \right\| = 0$$

$$(7.15): \quad f(distTLM, pGPS, angIRSB, rCAMB, pRDB) = D_{TLM/CAMB/GPS/IRSB} - \left\| \begin{pmatrix} X \\ Y \\ Z \end{pmatrix}_{GPS-RDB} \right\| = 0$$

$$(7.16): \quad f(\text{distTLM}, \text{pGPS}, \text{aIRSB}, \text{rCAMB}, \text{zTDB}) = D_{TLM/CAMB/GPS/IRSB} -$$

$$\left\| \begin{pmatrix} X \\ Y \\ Z \end{pmatrix}_{GPS/CAMB/TDB} \right\| = 0$$

Les équations (8.1) à (8.16) correspondent à des utilisations d'atterrissage basées sur l'image (IBL pour « Image Based Landing » en anglais). Ici, les relations entre les sources sont établies de manière théorique. Les équations ne sont pas explicitées.

Une utilisation d'IBL pour comparer les deux flux optiques (ofCAM et ofCAMB) en utilisant des angles IRS (angIRS ou angIRSB) et la vitesse de l'aéronef (inertielle ou dérivée du GPS, pGPS) entraîne les équations suivantes :

$$(8.1): f(\text{vIRS}, \text{angIRS}, \text{ofCAM}, \text{ofCAMB}) = 0$$

$$(8.2): f(\text{vIRS}, \text{angIRSB}, \text{ofCAM}, \text{ofCAMB}) = 0$$

$$(8.3): f(\text{pGPS}, \text{angIRS}, \text{ofCAM}, \text{ofCAMB}) = 0$$

$$(8.4): f(\text{pGPS}, \text{angIRSB}, \text{ofCAM}, \text{ofCAMB}) = 0.$$

Pour une utilisation d'IBL pour évaluer la distance entre l'aéronef AC et la piste, les équations sont les mêmes que pour le télémètre en substituant la distance télémètre à la distance calculée à partir du flux optiques, des angles IRS (aIRS ou aIRSB) et de la vitesse IRS ou GPS.

$$(8.5): f(\text{pGPS}, \text{angIRS}, \text{rofCAM}, \text{pRDB}) = 0$$

$$(8.6): f(\text{pGPS}, \text{angIRSB}, \text{rofCAM}, \text{pRDB}) = 0$$

$$(8.7): f(\text{pGPS}, \text{angIRS}, \text{rofCAMB}, \text{pRDB}) = 0$$

$$(8.8): f(\text{pGPS}, \text{angIRSB}, \text{rofCAMB}, \text{pRDB}) = 0$$

$$(8.9): f(\text{pGPS}, \text{angIRS}, \text{rofCAM}, \text{TDB}) = 0$$

$$(8.10): f(\text{pGPS}, \text{angIRSB}, \text{rofCAM}, \text{TDB}) = 0$$

$$(8.11): f(\text{pGPS}, \text{angIRS}, \text{rofCAMB}, \text{TDB}) = 0$$

$$(8.12): f(\text{pGPS}, \text{angIRSB}, \text{rofCAMB}, \text{TDB}) = 0$$

De plus la désignation pilote et la distance à la piste calculée par l'IBL permettent de situer l'aéronef AC par rapport à la piste et donc en utilisant la base de donnée de calculer la hauteur de l'aéronef AC par rapport au terrain. Cette hauteur peut être comparée à la hauteur des radioaltimètres :

$$(8.13) : f(\text{vIRS}, \text{angIRS}, \text{rofCAM}, \text{RDB}, \text{TDB}, \text{RA}) = 0$$

$$(8.14) : f(\text{vIRS}, \text{angIRSB}, \text{rofCAM}, \text{RDB}, \text{TDB}, \text{RA}) = 0$$

$$(8.15) : f(\text{vIRS}, \text{angIRS}, \text{rofCAMB}, \text{RDB}, \text{TDB}, \text{RA}) = 0$$

$$(8.16) : f(\text{vIRS}, \text{angIRSB}, \text{rofCAMB}, \text{RDB}, \text{TDB}, \text{RA}) = 0.$$

À partir des équations, une note entre 0 et 1 est calculée à l'aide d'une fonction de masse (dont le seuil et la pente sont réglés). Lorsqu'une équation est vérifiée, modulo une certaine précision, sa masse est égale à 1 et on en déduit que les paramètres sont cohérents entre eux.

Cela ne suffit pas toujours à garantir que les mesures de paramètres utilisées dans l'équation sont toutes correctes ni que les sources qui émettent ces paramètres ne sont pas en panne. Par exemple l'équation (3.1) issue de la désignation pilote du TDP permet seulement de vérifier que la position GPS de l'avion est dans l'axe de désignation de la piste. L'équation peut être vérifiée et la position GPS fausse mais toujours dans le cône de précision autour de l'axe de désignation.

Une première étape de la consolidation consiste à calculer des notes pour chacun des scénarios de perte totale d'une source. La note du scénario de panne GPS est la valeur minimale des masses des équations n'utilisant pas de paramètre GPS. Cette note est notée sc(GPSfault).

Par exemple pour une architecture où l'IBL n'est pas utilisé, la note de la panne GPS est :
sc(GPSfault) = $min(m_{32}, m_{41}, m_{51}, m_{52}, m_{54}, m_{61}, m_{62}, m_{64}, m_{66}, m_{71}, m_{72}, m_{77}, m_{78})$ avec $m_{ij}$ la fonction de masse de l'équation (i.j).

La note d'une source A est le maximum des notes de scénario de perte des autres sources pour lesquelles les paramètres de la source A sont encore observables, c'est-à-dire, la note du scénario de panne tombe à zéro en cas de panne de la source A.

L'observabilité des pannes GPS est détaillée en exemple dans le paragraphe suivant.

La comparaison avec les vitesses inertielles IRS, équations (1.1) et (1.2), ne permet pas de détecter un biais GPS ou une dérive lente. Pour les couvrir il faut donc rajouter l'équation (2.1) ou (3.1) aux équations (1.1) et (1.2) par exemple. On obtient les jeux d'équations suivants :

- (1.1), (1.2) et (2.1) en utilisant les sources IRS, RA et DB :

$$\begin{cases} (X_{GPS}, Y_{GPS}) = \int (V_{XIRS}, V_{YIRS}) \\ Z_{GPS} = \int V_{ZIRS} \\ Z_{GPS} = H_{RA} + Z_{TDB}(X_{GPS}, Y_{GPS}) \end{cases}$$

- (1.1), (1.2) et (3.1) en utilisant les sources IRS, DB et CAM :

$$\begin{cases} (X_{GPS}, Y_{GPS}) = \int (V_{XIRS}, V_{YIRS}) \\ Z_{GPS} = \int V_{ZIRS} \\ \begin{pmatrix} x_{pix} \\ y_{pix} \end{pmatrix}_{CAM} = R_{IRS} \left( \begin{pmatrix} X \\ Y \\ Z \end{pmatrix}_{GPS-RDB} \right) \end{cases}$$

- (2.1) et (3.1) en utilisant les sources RA, DB, CAM et IRS :

$$\begin{cases} Z_{GPS} = H_{RA} + Z_{TDB}(X_{GPS}, Y_{GPS}) \\ \begin{pmatrix} x_{pix} \\ y_{pix} \end{pmatrix}_{CAM} = R_{IRS} \left( \begin{pmatrix} X \\ Y \\ Z \end{pmatrix}_{GPS-RDB} \right) \end{cases}$$

- (2.1) et (6.3) en utilisant les sources RA, DB, CAM et IRSB :

$$\begin{cases} Z_{GPS} = H_{RA} + Z_{TDB}(X_{GPS}, Y_{GPS}) \\ \begin{pmatrix} x_{pix} \\ y_{pix} \end{pmatrix}_{CAM} = R_{IRSB} \left( \begin{pmatrix} X \\ Y \\ Z \end{pmatrix}_{GPS-RDB} \right) \end{cases}$$

Dans la suite, on décrit un exemple d'architecture notée H3 composée des capteurs GPS, IRS (angles et les vitesses inertielles), radioaltimètres, IRS dissimilaire (angles), un télémètre (distance terrain et distance TDP), d'une base de données de la position piste (RDB), d'une base de données terrain (TDB) et de deux désignations pilote dissimilaire CAM et CAMB.

Le calcul des notes de scénario de panne de perte totale d'une source s'obtient en prenant la valeur minimale des masses des équations n'utilisant pas les paramètres issues de la source en question :

$$sc(GPSfault) = \min(m_{32}, m_{41}, m_{51}, m_{52}, m_{54}, m_{61}, m_{62}, m_{64}, m_{66}, m_{71}, m_{72}, m_{77}, m_{78}),$$

$$sc(IRSfault) = \min(m_{21}, m_{41}, m_{51}, m_{52}, m_{63}, \dots, m_{66}, m_{76}, m_{78}, m_{713}, \dots, m_{716}),$$

$$sc(IRSBfault) = \min(m_{11}, m_{12}, m_{21}, m_{32}, m_{41}, m_{51}, m_{52}, m_{71}, m_{73}, m_{75}, m_{77}, m_{79}, \dots, m_{712}),$$

$$sc(RAfault) = \min(m_{11}, m_{12}, m_{31}, m_{32}, m_{41}, m_{51}, \dots, m_{54}, m_{61}, \dots, m_{66}, m_{73}, m_{74}, m_{77}, \dots, m_{716}),$$

$$sc(CAMfault) = \\ \min(m_{11}, m_{12}, m_{21}, m_{41}, m_{61}, m_{62}, m_{65}, m_{66}, m_{71}, \dots, m_{78}, m_{711}, m_{712}, m_{715}, m_{716}),$$

$$sc(CAMBfault) = \min(m_{11}, m_{12}, m_{21}, m_{31}, m_{32}, m_{41}, m_{61}, \dots, m_{64}, m_{71}, \dots, m_{710}, m_{713}, m_{714}),$$

$$sc(DBfault) = \min(m_{11}, m_{12}, m_{51}, m_{52}, m_{61}, m_{62}, m_{71}, m_{72}, m_{75}, m_{76}),$$

$$sc(TLMfault) = \min(m_{11}, m_{12}, m_{21}, m_{31}, m_{32}, m_{41}, m_{51}, \dots, m_{54}, m_{61}, \dots, m_{66}).$$

La note d'une source est le maximum des notes des scénarios de panne des autres sources.

sc(GPS) = max(sc(IRSfault), sc(IRSBfault), sc(RAfault), sc(CAMfault), sc(CAMBfault), sc(TLMfault)),

sc(IRS) = max(sc(GPSfault), sc(IRSBfault), sc(RAfault), sc(DBfault), sc(CAMfault), sc(CAMBfault), sc(TLMfault)),

sc(IRSB) = max(sc(GPSfault), sc(IRSfault), sc(RAfault), sc(DBfault), sc(CAMfault), sc(CAMBfault), sc(TLMfault)),

sc(RA) = max(sc(GPSfault), sc(IRSfault), c(IRSBfault), sc(DBfault), sc(CAMfault), sc(CAMBfault), sc(TLMfault)),

sc(TDB) = max(sc(IRSfault), sc(IRSBfault), sc(RAfault), sc(CAMfault), sc(CAMBfault), sc(TLMfault)),

sc(RDB) = max(sc(IRSfault), c(IRSBfault), sc(RAfault), sc(CAMfault), sc(CAMBfault), sc(TLMfault)),

sc(CAM) = max(sc(GPSfault), sc(IRSfault), sc(IRSBfault), sc(RAfault), sc(DBfault), sc(CAMBfault), sc(TLMfault)),

sc(CAMB) = max(sc(GPSfault), sc(IRSfault), sc(IRSBfault), sc(RAfault), sc(DBfault), sc(CAMfault), sc(TLMfault)),

sc(TLM) = max(sc(GPSfault), sc(IRSfault), sc(IRSBfault), sc(RAfault), sc(DBfault), sc(CAMfault), sc(CAMBfault)).

Les paramètres de vol sont alors consolidés en fonction des notes de chacune des sources.

Exemple 3

Cet exemple a pour but d'améliorer une approche d'aéronef. Un des principaux paramètres de vol critique à mesurer pendant une phase d'approche est la hauteur H : l'altitude relative entre l'aéronef AC et le sol sous l'aéronef AC. Cette hauteur H est surveillée pendant toute l'approche afin de s'assurer qu'il reste assez de marge avec le sol. Cette hauteur H est utilisée par les lois de contrôle pendant l'arrondi (« flare » en anglais) pour réaliser un toucher des roues nominal.

On considère que X est la distance horizontale jusqu'au seuil de piste et Z est la distance verticale jusqu'au seuil de piste.

Les paramètres de vol à mesurer sont les suivants :

- $H_{RA1}$ et $H_{RA2}$, les distances verticales par rapport au sol mesurées par un radioaltimètre 1 et un radioaltimètre 2, respectivement,
- $X_{GPS}$ et $Z_{GPS}$, les positions GPS relatives par rapport au seuil de piste,
- $V_{XIRS}$ et $V_{ZIRS}$, les vitesses inertielles IRS de l'aéronef AC,
- $X_{IRS}$ et $Z_{IRS}$, les positions IRS de l'aéronef AC déterminées par intégration à partir des vitesses inertielles IRS,
- $\tan(\gamma_{GS}) = Z_{aircraft}/X_{aircraft}$, l'angle de position de l'aéronef AC entre le seuil de piste et un plan horizontal fourni par l'angle de déviation du système d'atterrissage aux instruments ILS (« Instrument Landing System » en anglais),
- $Z_T(X)$, une altitude de terrain pour une distance donnée par rapport au seuil de piste, fournie par la base de données de terrain TDB,
- $Z_R + \Delta Z_{GPS}$ et $Z_R + \Delta Z_{IRS}$, des hauteurs calculées à partir de mesures radar, de mesures GPS et de mesures IRS.

Les équations liant les mesures desdits paramètres de vol sont les suivantes :

$$H_{RA1} + H_{RA2} = 0 \qquad\qquad \text{(RA)}$$

$$Z_{GPS} - H_{RA1} - Z_T(X_{GPS}) = 0 \qquad\qquad \text{(GT1)}$$

$$Z_{GPS} - H_{RA2} - Z_T(X_{GPS}) = 0 \qquad\qquad \text{(GT2)}$$

$$Z_{IRS} - H_{RA1} - Z_T(X_{IRS}) = 0 \qquad\qquad \text{(IT1)}$$

$$Z_{IRS} - H_{RA2} - Z_T(X_{IRS}) = 0 \qquad\qquad \text{(IT2)}$$

$$X_{GPS} - X_{IRS} = 0 \text{ et } Z_{GPS} - Z_{IRS} = 0 \qquad\qquad \text{(GI)}$$

$$Z_{GPS} - X_{GPS} \tan(\gamma_{GS}) = 0 \qquad\qquad \text{(GS)}$$

$$Z_{IRS} - X_{IRS} \tan(\gamma_{GS}) = 0 \qquad \text{(IS)}$$

$$X_{GPS} \tan(\gamma_{GS}) - H_{RA1} - Z_T(X_{GPS}) = 0 \qquad \text{(GST1)}$$

$$X_{GPS} \tan(\gamma_{GS}) - H_{RA2} - Z_T(X_{GPS}) = 0 \qquad \text{(GST2)}$$

$$X_{IRS} \tan(\gamma_{GS}) - H_{RA1} - Z_T(X_{IRS}) = 0 \qquad \text{(IST1)}$$

$$X_{IRS} \tan(\gamma_{GS}) - H_{RA2} - Z_T(X_{IRS}) = 0 \qquad \text{(IST2)}$$

$$Z_R + \Delta Z_{GPS} - H_{RA1} = 0 \qquad \text{(RG1)}$$

$$Z_R + \Delta Z_{GPS} - H_{RA2} = 0 \qquad \text{(RG2)}$$

$$Z_R + \Delta Z_{IRS} - H_{RA1} = 0 \qquad \text{(RI1)}$$

$$Z_R + \Delta Z_{IRS} - H_{RA2} = 0 \qquad \text{(RI2)}$$

$$X_{GPS} \tan(\gamma_{GS}) - Z_R - \Delta Z_{GPS} - Z_T(X_{GPS}) = 0 \qquad \text{(GSTR)}$$

$$X_{IRS} \tan(\gamma_{GS}) - Z_R - \Delta Z_{IRS} - Z_T(X_{IRS}) = 0 \qquad \text{(ISTR)}$$

Une première note de validité comprise entre 0 et 1 est attribuée respectivement à chacune de ces équations.

Les scénarios de panne ainsi que les deuxièmes notes de validité S attribuées respectivement aux scénarios de panne sont définis comme suit en suivant la règle de Zadeh :

- Toutes les mesures sont non erronées :
  S0 = min(toutes les premières notes de validité).

Cela signifie que la deuxième note de validité S0 est égale à la valeur minimale de toutes les premières notes de validité.

- Seule la mesure du radioaltimètre 1 est erronée :
  S1 = min(toutes les premières notes sauf celles des équations RA, GT1, IT1, GST1, IST1, RG1 et RI1).

Cela signifie que la deuxième note de validité S1 est égale à la valeur minimale de toutes les premières notes de validité, sans tenir compte des premières notes de validité des équations RA, GT1, IT1, GST1, IST1, RG1 et RI1.

- Seule la mesure du radioaltimètre 2 est erronée :
  S2 = min(toutes les premières notes sauf celles des équations RA, GT2, IT2, GST2, IST2, RG2 et RI2).

Cela signifie que la deuxième note de validité S2 est égale à la valeur minimale de toutes les premières notes de validité, sans tenir compte des premières notes de validité des équations RA, GT2, IT2, GST2, IST2, RG2 et RI2.

- Les mesures des radioaltimètres 1 et 2 sont erronées :
  S12 = min(notes des équations GI, GS, IS, GSTR et ISTR).

Cela signifie que la deuxième note de validité S12 est égale à la valeur minimale des premières notes de validité des équations GI, GS, IS, GSTR et ISTR.

- Seule la mesure GPS est erronée :
  SG = min(toutes les premières notes sauf celles des équations GT1, GT2, GI, GST1, GST2, RG1, RG2 et GSTR).

Cela signifie que la deuxième note de validité SG est égale à la valeur minimale de toutes les premières notes de validité, sans tenir compte des premières notes de validité des équations GT1, GT2, GI, GST1, GST2, RG1, RG2 et GSTR.

- Seule la mesure IRS est erronée :
  SI = min(toutes les premières notes sauf celles des équations IT1, IT2, GI, IS, IST1, IST2, RI1, RI2 et ISTR).

Cela signifie que la deuxième note de validité SI est égale à la valeur minimale de toutes les premières notes de validité, sans tenir compte des premières notes de validité des équations IT1, IT2, GI, IS, IST1, IST2, RI1, RI2 et ISTR.

- Seule la mesure ILS est erronée :
  SS = min(toutes les premières notes sauf celles des équations GS, IS, GST1, GST2, IST1, IST2, GSTR et ISTR).

Cela signifie que la deuxième note de validité SS est égale à la valeur minimale de toutes les premières notes de validité, sans tenir compte des premières notes de validité des équations GS, IS, GST1, GST2, IST1, IST2, GSTR et ISTR.

- Seule l'altitude de terrain de la base de données est erronée :
  ST = min(toutes les premières notes sauf celles des équations GT1, GT2, IT1, IT2, GST1, GST2, IST1, IST2, GSTR et ISTR).

Cela signifie que la deuxième note de validité ST est égale à la valeur minimale de toutes les premières notes de validité, sans tenir compte des premières notes de validité des équations GT1, GT2, IT1, IT2, GST1, GST2, IST1, IST2, GSTR et ISTR.

- Seule la mesure de distance par radar est erronée :
  SR = min(toutes les premières notes sauf celles des équations RG1, RG2, RI1, RI2, GSTR et ISTR).

Cela signifie que la deuxième note de validité SR est égale à la valeur minimale de toutes les premières notes de validité, sans tenir compte des premières notes de validité des équations RG1, RG2, RI1, RI2, GSTR et ISTR.
Les validités des mesures sont alors déterminées de la manière suivante :

- $m_1 = m(RA_1) = \max(S0, S2, SG, SI, SS, ST, SR)$,
- $m_2 = m(RA_2) = \max(S0, S1, SG, SI, SS, ST, SR)$,
- $m(GPS) = \max(S0, S1, S2, S12, SI, SS, ST, SR)$,
- $m(IRS) = \max(S0, S1, S2, S12, SG, SS, ST, SR)$,
- $m(ILS) = \max(S0, S1, S2, S12, SG, SI, ST, SR)$,
- $m(TDB) = \max(S0, S1, S2, S12, SG, SI, SS, SR)$,
- $m(R) = \max(S0, S1, S2, S12, SG, SI, SS, ST)$.

La hauteur H peut alors être consolidée de la manière suivante :

$$H = m_1 m_2 \frac{(H_{RA1} + H_{RA2})}{2} + m_1(1 - m_2)H_{RA1} + (1 - m_1)m_2 H_{RA2}$$
$$+ (1 - m_1)(1 - m_2) \cdot BackUp$$

La grandeur *BackUp* est déterminée par plusieurs estimateurs de hauteur grâce aux relations suivantes: $Z_{GPS} - Z_T(X_{GPS})$, $Z_{IRS} - Z_T(X_{IRS})$, $X_{GPS} \tan(\gamma_{GS}) - Z_T(X_{GPS})$, $X_{IRS} \tan(\gamma_{GS}) - Z_T(X_{IRS})$, $Z_R + \Delta Z_{GPS}$, $Z_R + \Delta Z_{IRS}$.

**Revendications**

1. Procédé de fusion de mesures de paramètres de vol d'un aéronef, les mesures de paramètres de vol étant liées entre elles par au moins une équation, le procédé comprenant les étapes suivantes :

   - une étape (E1) d'acquisition, mise en œuvre par au moins un module d'acquisition (2), consistant à acquérir au moins une mesure d'au moins un paramètre de vol ;
   - une première étape (E2) d'attribution, mise en œuvre par un premier module d'attribution (3), consistant à attribuer respectivement une première note de validité à l'équation ou à chacune des équations liant les mesures des paramètres de vol entre elles, la première note de validité étant déterminée en vérifiant si la ou les mesures du ou des paramètres de vol sont une ou des solutions de la ou des équations ;
   - une deuxième étape (E3) d'attribution, mise en œuvre par un deuxième module d'attribution (4), consistant à attribuer respectivement une deuxième note de validité à un ou plusieurs scénarios de panne, chacun des scénarios de panne faisant intervenir un ou des modules d'acquisition (2), la deuxième note de validité pour un scénario de panne considéré étant déterminée à partir de la ou des premières notes de validité attribuées à la ou aux équations liant les mesures des paramètres de vol acquises par le ou les modules d'acquisition (2) intervenant respectivement dans le scénario de panne considéré ;
   - une étape (E4) de détermination, mise en œuvre par un module de détermination (5), consistant à déterminer la validité de la ou des mesures du ou des paramètres de vol à partir de la ou des deuxièmes notes de validité ;
   - une étape (E5) de consolidation, mise en œuvre par un module de consolidation (6), consistant à consolider les mesures du ou des paramètres de vol en fonction de la validité des mesures déterminée à l'étape (E4) de détermination,

   **caractérisé en ce qu'**il comprend en outre une étape (E6) de transmission, mise en œuvre par un module de transmission (7), consistant à transmettre la ou les mesures consolidées du ou des paramètres de vol à un dispositif utilisateur (8),
   et **en ce que** la deuxième étape (E3) d'attribution comprend les sous-étapes suivantes, chacune des sous-étapes suivantes étant mise en œuvre pour chacun des scénarios de panne :

   - une première sous-étape (E31) d'identification, mise en œuvre par un premier sous-module d'identification (41), consistant à identifier, parmi la ou les équations, la ou les équations liant les mesures de paramètres de vol acquises par le ou les modules d'acquisition (2) intervenant dans le scénario de panne, le ou les modules d'acquisition (2) identifiés correspondant en outre au ou aux modules d'acquisition (2) dont le scénario de panne suppose que le ou les modules d'acquisition (2) fournissent des mesures non erronées,
   - une troisième sous-étape (E32) d'attribution, mise en œuvre par un troisième sous-module d'attribution (42), consistant à attribuer la deuxième note de validité en fonction de la première note de validité de la ou des équations identifiées dans la première sous-étape (E31) d'identification.

2. Procédé de fusion de mesures de paramètres de vol d'un aéronef, les mesures de paramètres de vol étant liées entre elles par au moins une équation, le procédé comprenant les étapes suivantes :

   - une étape (E1) d'acquisition, mise en œuvre par au moins un module d'acquisition (2), consistant à acquérir au moins une mesure d'au moins un paramètre de vol ;
   - une première étape (E2) d'attribution, mise en œuvre par un premier module d'attribution (3), consistant à attribuer respectivement une première note de validité à l'équation ou à chacune des équations liant les mesures des paramètres de vol entre elles, la première note de validité étant déterminée en vérifiant si la ou les mesures du ou des paramètres de vol sont une ou des solutions de la ou des équations ;
   - une deuxième étape (E3) d'attribution, mise en œuvre par un deuxième module d'attribution (4), consistant à attribuer respectivement une deuxième note de validité à un ou plusieurs scénarios de panne, chacun des scénarios de panne faisant intervenir un ou des modules d'acquisition (2), la deuxième note de validité pour un scénario de panne considéré étant déterminée à partir de la ou des premières notes de validité attribuées à la ou aux équations liant les mesures des paramètres de vol acquises par le ou les modules d'acquisition (2) intervenant respectivement dans le scénario de panne considéré ;
   - une étape (E4) de détermination, mise en œuvre par un module de détermination (5), consistant à déterminer la validité de la ou des mesures du ou des paramètres de vol à partir de la ou des deuxièmes notes de validité ;
   - une étape (E5) de consolidation, mise en œuvre par un module de consolidation (6), consistant à consolider les mesures du ou des paramètres de vol en fonction de la validité des mesures déterminée à l'étape (E4) de détermination,

**caractérisé en ce qu'**il comprend en outre une étape (E6) de transmission, mise en œuvre par un module de transmission (7), consistant à transmettre la ou les mesures consolidées du ou des paramètres de vol à un dispositif utilisateur (8),
et **en ce que** la deuxième étape (E3) d'attribution comprend les sous-étapes suivantes :

- une deuxième sous-étape (E33) d'identification, mise en œuvre par un deuxième sous-module d'identification (43), consistant à identifier, parmi les équations, une ou des premières équations liant les mesures de paramètres de vol acquises par le ou les modules d'acquisition intervenant dans le scénario de panne, le ou les modules d'acquisition (2) identifiés correspondant en outre au ou aux modules d'acquisition (2) dont le scénario de panne suppose que le ou les modules d'acquisition fournissent des mesures non-erronées, ainsi que une ou des deuxièmes équations liant les mesures de paramètres de vol acquises par le ou les modules d'acquisition intervenant dans le scénario de panne et dont le scénario de panne suppose que le ou les modules d'acquisition fournissent des mesures erronées,
- une quatrième sous-étape (E34) d'attribution, mise en œuvre par un quatrième sous-module d'attribution (44), consistant à attribuer la deuxième note de validité à chacun des scénarios de panne à partir des équations identifiées dans la deuxième sous-étape (E33) d'identification.

3. Procédé selon la revendication 1 ou la revendication 2,
**caractérisé en ce que** la première étape (E2) d'attribution comprend les sous-étapes suivantes, chacune des sous-étapes suivantes étant mise en œuvre pour chacune des équations :

- une première sous-étape (E11) de calcul, mise en œuvre par un premier sous-module de calcul (31), consistant à calculer une valeur absolue d'un résultat de l'équation sans second membre à partir de la ou des mesures du ou des paramètres de vol intervenant dans l'équation, l'équation sans second membre se présentant sous la forme $f(x_1,\cdots, x_i,\cdots, x_n) = 0$ dans laquelle $x_1\cdots,x_i,\cdots,x_n$ correspondent à des mesures de paramètres de vol et $f$ correspond à une fonction liant les mesures de paramètres de vol ;
- une sous-étape (E12) de comparaison, mise en œuvre par un sous-module de comparaison (32), consistant à comparer la valeur absolue du résultat avec au moins une valeur seuil prédéterminée ;
- une première sous-étape (E13) d'attribution, mise en œuvre par un premier sous-module d'attribution (33), consistant à attribuer la première note de validité à l'équation à partir de la comparaison de la valeur absolue du résultat avec la ou les valeurs seuil prédéterminées.

4. Procédé selon la revendication 3,
**caractérisé en ce que** la valeur absolue du résultat est comparée dans la sous-étape (E12) de comparaison avec une valeur seuil prédéterminée, et **en ce que** :

- la première note de validité attribuée est égale à 1 si la valeur absolue du résultat est inférieure à la valeur seuil prédéterminée,
- la première note de validité attribuée est égale à 0 si la valeur absolue du résultat est supérieure ou égale à la valeur seuil prédéterminée.

5. Procédé selon la revendication 3,

**caractérisé en ce que** la valeur absolue du résultat est comparée dans la sous-étape (E12) de comparaison avec une première valeur seuil prédéterminée et une deuxième valeur seuil prédéterminée, la première valeur seuil prédéterminée étant inférieure à la deuxième valeur seuil prédéterminée,
la première note de validité attribuée étant égale à 1, si la valeur absolue du résultat est inférieure à la première valeur seuil prédéterminée,
la première note de validité attribuée étant égale à 0, si la valeur absolue du résultat est supérieure ou égale à la deuxième valeur seuil,
la première note de validité attribuée étant supérieure à 0 et inférieure à 1 en suivant une fonction monotone décroissante de 1 à 0 au fur et à mesure que la valeur absolue du résultat augmente, si la valeur absolue du résultat est supérieure ou égale à la première valeur seuil prédéterminée et si la valeur absolue du résultat est inférieure à la deuxième valeur seuil prédéterminée.

6. Procédé selon la revendication 1 ou la revendication 2,
**caractérisé en ce que** la première étape (E2) d'attribution comprend :

- une deuxième sous-étape (E14) de calcul, mise en œuvre par un deuxième sous-module de calcul (34), consistant à calculer une valeur statistique, à partir d'une méthode de classification, de la ou des équations et de la ou des mesures du ou des paramètres de vol,
- une deuxième sous-étape (E15) d'attribution, mise en œuvre par un deuxième sous-module d'attribution (35), consistant à attribuer la première note de validité en tenant compte de la valeur statistique.

7.  Procédé selon la revendication 1,

    **caractérisé en ce que** la deuxième note de validité attribuée à la troisième sous-étape (E32) d'attribution est égale à 1 si l'équation ou toutes les équations identifiées dans la première sous-étape (E31) d'identification ont une première note de validité attribuée égale à 1,
    et **en ce que** la deuxième note de validité attribuée à la troisième sous-étape (E32) d'attribution est égale à 0 si au moins une des équations identifiées dans la première (E31) sous-étape d'identification a une première note de validité différente de 1.

8.  Procédé selon la revendication 1,
    **caractérisé en ce que** la deuxième note de validité attribuée à la troisième sous-étape (E32) d'attribution est égale à un résultat d'une combinaison par un opérateur flou « ET » de la ou des premières notes de validité de la ou des équations identifiées dans la première sous-étape (E31) d'identification.

9.  Procédé selon la revendication 2,

    **caractérisé en ce que** la deuxième note de validité attribuée à la quatrième sous-étape (E34) d'attribution est égale à 1 pour le ou les scénarios de panne faisant intervenir le ou les modules d'acquisition (2) configurés pour acquérir la ou les mesures du ou des paramètres de vol liés par la ou les équations identifiées dans la deuxième sous-étape (E33) d'identification, si la ou les premières équations identifiées dans la deuxième sous-étape (E33) d'identification ont une première note de validité attribuée égale à 1 et si la ou les deuxièmes équations identifiées dans la deuxième sous-étape (E33) d'identification ont une première note de validité attribuée égale à 0,
    et **en ce que** la deuxième note de validité attribuée à la quatrième sous-étape (E34) d'attribution est égale à 0 pour le ou les scénarios de panne faisant intervenir le ou les modules d'acquisition (2) configurés pour acquérir la ou les mesures du ou des paramètres de vol liés par la ou les équations qui ne sont pas identifiées dans la deuxième sous-étape (E33) d'identification.

10. Procédé selon la revendication 2,

    **caractérisé en ce que**, pour le ou les scénarios de panne faisant intervenir un ou des modules d'acquisition (2) configurés pour acquérir la ou les mesures du ou des paramètres de vol liés par la ou les premières équations identifiées dans la deuxième sous-étape (E33) d'identification, la deuxième note de validité est égale à un résultat d'une combinaison par un opérateur flou « ET » de la ou des premières notes de validité attribuées à la ou aux premières équations liant les paramètres de vol,
    et **en ce que**, pour le ou les scénarios de panne ne faisant intervenir aucun des modules d'acquisition (2) configurés pour acquérir la ou les mesures du ou des paramètres de vol liés par la ou les équations identifiées dans la deuxième sous-étape (E33) d'identification, la deuxième note de validité est égale à 0.

11. Procédé selon l'une quelconque des revendications 7 ou 9,
    **caractérisé en ce que** l'étape (E4) de détermination comprend les sous-étapes suivantes, chacune des sous-étapes suivantes étant mise en œuvre pour chacune des mesures du ou des paramètres de vol :

    - une troisième sous-étape (E41) d'identification, mise en œuvre par un troisième sous-module d'identification (51), consistant à identifier le ou les scénarios de panne faisant intervenir le module d'acquisition (2) configuré pour acquérir la mesure de paramètre de vol, dont la deuxième note de validité attribuée est égale à 1,
    - une première sous-étape (E42) de détermination, mise en œuvre par un premier sous-module de détermination (52), consistant à déterminer la validité de la mesure de paramètre de vol à partir du ou des scénarios de panne identifiés dans la troisième sous-étape (E41) d'identification, la mesure de paramètre de vol étant valide s'il existe au moins un scénario de panne dont la deuxième note de validité attribuée est égale à 1, sinon la mesure de paramètre de vol n'est pas valide.

**12.** Procédé selon l'une quelconque des revendications 8 ou 10, **caractérisé en ce que** l'étape (E4) de détermination comprend une deuxième sous-étape (E43) de détermination, mise en œuvre par un deuxième sous-module de détermination (53) pour chacune des mesures du ou des paramètres de vol, consistant à déterminer la validité de la mesure de paramètre de vol, la validité de la mesure de paramètre de vol étant égale à un résultat d'une combinaison par un opérateur flou « OU » des deuxièmes notes de validité attribuées aux scénarios de panne faisant intervenir le module d'acquisition (2) configuré pour acquérir la mesure de paramètre de vol.

**13.** Système de fusion de mesures de paramètres de vol d'un aéronef (AC), les mesures de paramètres de vol étant liées entre elles par au moins une équation, le système comprenant :

- au moins un module d'acquisition (2) configuré pour acquérir au moins une mesure d'au moins un paramètre de vol ;
- un premier module d'attribution (3) configuré pour attribuer respectivement une première note de validité à l'équation ou à chacune des équations liant les mesures des paramètres de vol entre elles, la première note de validité étant déterminée en vérifiant si la ou les mesures du ou des paramètres de vol sont une ou des solutions de la ou des équations ;
- un deuxième module d'attribution (4) configuré pour attribuer respectivement une deuxième note de validité à un ou plusieurs scénarios de panne, chacun des scénarios de panne faisant intervenir un ou des modules d'acquisition (2), la deuxième note de validité pour un scénario de panne considéré étant déterminée à partir de la ou des premières notes de validité attribuées à la ou aux équations liant les mesures des paramètres de vol acquises par le ou les modules d'acquisition (2) intervenant respectivement dans le scénario de panne considéré ;
- un module de détermination (5) configuré pour déterminer la validité de la ou des mesures du ou des paramètres de vol à partir de la ou des deuxièmes notes de validité ;
- un module de consolidation (6) configuré pour consolider les mesures du ou des paramètres de vol en fonction de la validité des mesures déterminée par le module de détermination (5),

**caractérisé en ce qu'**il comprend en outre un module de transmission (7) configuré pour transmettre la ou les mesures consolidées du ou des paramètres de vol à un dispositif utilisateur (8).
et **en ce que** le deuxième module d'attribution (4) comprend les sous-modules suivants :

- un premier sous-module d'identification (41), configuré pour identifier, parmi la ou les équations, la ou les équations liant les mesures de paramètres de vol acquises par le ou les modules d'acquisition (2) intervenant dans le scénario de panne, le ou les modules d'acquisition (2) identifiés correspondant en outre au ou aux modules d'acquisition (2) dont le scénario de panne suppose que le ou les modules d'acquisition (2) fournissent des mesures non erronées,
- un troisième sous-module d'attribution (42), configuré pour attribuer la deuxième note de validité en fonction de la première note de validité de la ou des équations identifiées par le premier sous-module d'identification (41).

**14.** Système de fusion de mesures de paramètres de vol d'un aéronef (AC), les mesures de paramètres de vol étant liées entre elles par au moins une équation, le système comprenant :

- au moins un module d'acquisition (2) configuré pour acquérir au moins une mesure d'au moins un paramètre de vol ;
- un premier module d'attribution (3) configuré pour attribuer respectivement une première note de validité à l'équation ou à chacune des équations liant les mesures des paramètres de vol entre elles, la première note de validité étant déterminée en vérifiant si la ou les mesures du ou des paramètres de vol sont une ou des solutions de la ou des équations ;
- un deuxième module d'attribution (4) configuré pour attribuer respectivement une deuxième note de validité à un ou plusieurs scénarios de panne, chacun des scénarios de panne faisant intervenir un ou des modules d'acquisition (2), la deuxième note de validité pour un scénario de panne considéré étant déterminée à partir de la ou des premières notes de validité attribuées à la ou aux équations liant les mesures des paramètres de vol acquises par le ou les modules d'acquisition (2) intervenant respectivement dans le scénario de panne considéré ;
- un module de détermination (5) configuré pour déterminer la validité de la ou des mesures du ou des paramètres de vol à partir de la ou des deuxièmes notes de validité ;
- un module de consolidation (6) configuré pour consolider les mesures du ou des paramètres de vol en fonction de la validité des mesures déterminée par le module de détermination (5),

**caractérisé en ce qu'**il comprend en outre un module de transmission (7) configuré pour transmettre la ou les mesures consolidées du ou des paramètres de vol à un dispositif utilisateur (8),
et **en ce que** le deuxième module d'attribution (4) comprend les sous-modules suivants :

- un premier sous-module d'identification (41), configuré pour identifier, parmi la ou les équations, la ou les équations liant les mesures de paramètres de vol acquises par le ou les modules d'acquisition (2) intervenant dans le scénario de panne, le ou les modules d'acquisition (2) identifiés correspondant en outre au ou aux modules d'acquisition (2) dont le scénario de panne suppose que le ou les modules d'acquisition (2) fournissent des mesures non erronées,
- un troisième sous-module d'attribution (42), consistant à attribuer la deuxième note de validité en fonction de la première note de validité de la ou des équations identifiées par le premier sous-module d'identification (41).

15. Aéronef,
**caractérisé en ce qu'**il comporte un système de fusion de mesures de paramètres de vol d'un aéronef, tel que celui spécifié sous la revendication 13 ou la revendication 14.


**Patentansprüche**

1. Verfahren zur Zusammenführung von Messungen von Flugparametern eines Luftfahrzeugs, wobei die Messungen von Flugparametern durch mindestens eine Gleichung miteinander verbunden werden, wobei das Verfahren die folgenden Schritte umfasst:

- einen Schritt (E1) des Erfassens, der von mindestens einem Erfassungsmodul (2) durchgeführt wird, der darin besteht, mindestens eine Messung mindestens eines Flugparameters zu erfassen;
- einen ersten Schritt (E2) des Zuweisens, der von einem ersten Zuweisungsmodul (3) durchgeführt wird, der darin besteht, jeweils eine erste Gültigkeitsnote der Gleichung oder jeder der Gleichungen zuzuweisen, die die Messungen der Flugparameter miteinander verbinden, wobei die erste Gültigkeitsnote bestimmt wird, indem überprüft wird, ob die Messung(en) des oder der Flugparameter eine oder mehrere Lösungen der Gleichung(en) sind;
- einen zweiten Schritt (E3) des Zuweisens, der von einem zweiten Zuweisungsmodul (4) durchgeführt wird, der darin besteht, jeweils eine zweite Gültigkeitsnote einem oder mehreren Störungsszenarien zuzuweisen, wobei bei jedem der Störungsszenarien ein oder mehrere Erfassungsmodule (2) zum Einsatz kommen, wobei die zweite Gültigkeitsnote für ein betrachtetes Störungsszenario anhand der ersten Gültigkeitsnote(n) bestimmt wird, die der oder den Gleichungen zugewiesen sind, die die Messungen der Flugparameter verbinden, die von dem oder den Erfassungsmodulen (2) erfasst werden, die jeweils im betrachteten Störungsszenario zum Einsatz kommen;
- einen Schritt (E4) des Bestimmens, der von einem Bestimmungsmodul (5) durchgeführt wird, der darin besteht, die Gültigkeit der Messung(en) des oder der Flugparameter anhand der zweiten Gültigkeitsnote(n) zu bestimmen;
- einen Schritt (E5) des Konsolidierens, der von einem Konsolidierungsmodul (6) durchgeführt wird, der darin besteht, die Messungen des oder der Flugparameter je nach der Gültigkeit der Messungen zu konsolidieren, die beim Schritt (E4) des Bestimmens bestimmt wird,

**dadurch gekennzeichnet, dass** es ferner einen Schritt (E6) des Übertragens umfasst, der von einem Übertragungsmodul (7) durchgeführt wird, der darin besteht, die konsolidierte(n) Messung(en) des oder der Flugparameter an eine Benutzervorrichtung (8) zu übertragen,
und dadurch, dass der zweite Schritt (E3) des Zuweisens die folgenden Unterschritte umfasst, wobei jeder der folgenden Unterschritte für jedes der Störungsszenarien durchgeführt wird:

- einen ersten Unterschritt (E31) des Ermittelns, der von einem ersten Ermittlungs-Untermodul (41) durchgeführt wird, der darin besteht, aus der oder den Gleichungen die Gleichung(en) zu ermitteln, die die Messungen von Flugparametern verbinden, die von dem oder den Erfassungsmodulen (2) erfasst werden, die im Störungsszenario zum Einsatz kommen, wobei das oder die ermittelten Erfassungsmodule (2) ferner dem oder den Erfassungsmodulen (2) entsprechen, deren Störungsszenario voraussetzt, dass das oder die Erfassungsmodule (2) nicht-fehlerhafte Messungen liefern,
- einen dritten Unterschritt (E32) des Zuweisens, der von einem dritten Zuweisungs-Untermodul (42) durchgeführt wird, der darin besteht, die zweite Gültigkeitsnote je nach der ersten Gültigkeitsnote der Gleichung(en) zuzuweisen, die im ersten Unterschritt (E31) des Ermittelns ermittelt werden.

2. Verfahren zur Zusammenführung von Messungen von Flugparametern eines Luftfahrzeugs, wobei die Messungen von Flugparametern durch mindestens eine Gleichung miteinander verbunden werden, wobei das Verfahren die folgenden Schritte umfasst:

- einen Schritt (E1) des Erfassens, der von mindestens einem Erfassungsmodul (2) durchgeführt wird, der darin besteht, mindestens eine Messung mindestens eines Flugparameters zu erfassen;
- einen ersten Schritt (E2) des Zuweisens, der von einem ersten Zuweisungsmodul (3) durchgeführt wird, der darin besteht, jeweils eine erste Gültigkeitsnote der Gleichung oder jeder der Gleichungen zuzuweisen, die die Messungen der Flugparameter miteinander verbinden, wobei die erste Gültigkeitsnote bestimmt wird, indem überprüft wird, ob die Messung(en) des oder der Flugparameter eine oder mehrere Lösungen der Gleichung(en) sind;
- einen zweiten Schritt (E3) des Zuweisens, der von einem zweiten Zuweisungsmodul (4) durchgeführt wird, der darin besteht, jeweils eine zweite Gültigkeitsnote einem oder mehreren Störungsszenarien zuzuweisen, wobei bei jedem der Störungsszenarien ein oder mehrere Erfassungsmodule (2) zum Einsatz kommen, wobei die zweite Gültigkeitsnote für ein betrachtetes Störungsszenario anhand der ersten Gültigkeitsnote(n) bestimmt wird, die der oder den Gleichungen zugewiesen sind, die die Messungen der Flugparameter verbinden, die von dem oder den Erfassungsmodulen (2) erfasst werden, die jeweils im betrachteten Störungsszenario zum Einsatz kommen;
- einen Schritt (E4) des Bestimmens, der von einem Bestimmungsmodul (5) durchgeführt wird, der darin besteht, die Gültigkeit der Messung(en) des oder der Flugparameter anhand der zweiten Gültigkeitsnote(n) zu bestimmen;
- einen Schritt (E5) des Konsolidierens, der von einem Konsolidierungsmodul (6) durchgeführt wird, der darin besteht, die Messungen des oder der Flugparameter je nach der Gültigkeit der Messungen zu konsolidieren, die beim Schritt (E4) des Bestimmens bestimmt wird,

**dadurch gekennzeichnet, dass** es ferner einen Schritt (E6) des Übertragens umfasst, der von einem Übertragungsmodul (7) durchgeführt wird, der darin besteht, die konsolidierte(n) Messung(en) des oder der Flugparameter an eine Benutzervorrichtung (8) zu übertragen,
und dadurch, dass der zweite Schritt (E3) des Zuweisens die folgenden Unterschritte umfasst:

- einen zweiten Unterschritt (E33) des Ermittelns, der von einem zweiten Ermittlungs-Untermodul (43) durchgeführt wird, der darin besteht, aus den Gleichungen eine oder mehrere erste Gleichungen zu ermitteln, die die Messungen von Flugparametern verbinden, die von dem oder den Erfassungsmodulen erfasst werden, die im Störungsszenario zum Einsatz kommen, wobei das oder die ermittelten Erfassungsmodule (2) ferner dem oder den Erfassungsmodulen (2) entsprechen, deren Störungsszenario voraussetzt, dass das oder die Erfassungsmodule nicht-fehlerhafte Messungen liefern, sowie eine oder mehrere zweite Gleichungen, die die Messungen von Flugparametern verbinden, die von dem oder den Erfassungsmodulen erfasst werden, die im Störungsszenario zum Einsatz kommen und deren Störungsszenario voraussetzt, dass das oder die Erfassungsmodule fehlerhafte Messungen liefern,
- einen vierten Unterschritt (E34) des Zuweisens, der von einem vierten Zuweisungs-Untermodul (44) durchgeführt wird, der darin besteht, die zweite Gültigkeitsnote jedem der Störungsszenarien anhand der Gleichungen zuzuweisen, die im zweiten Unterschritt (E33) des Ermittelns ermittelt werden.

3. Verfahren nach Anspruch 1 oder 2,
**dadurch gekennzeichnet, dass** der erste Schritt (E2) des Zuweisens die folgenden Unterschritte umfasst, wobei jeder der folgenden Unterschritte für jede der Gleichungen durchgeführt wird:

- einen ersten Unterschritt (E11) des Berechnens, der von einem ersten Berechnungs-Untermodul (31) durchgeführt wird, der darin besteht, einen Absolutwert eines Ergebnisses der Gleichung ohne zweite Seite anhand der Messung(en) des oder der Flugparameter zu berechnen, die in der Gleichung vorkommen, wobei die Gleichung ohne zweite Seite in der Form $f(x_1, \cdots, x_i, \cdots, x_n) = 0$ vorliegt, wobei $x_1, \cdots, x_i, \cdots, x_n$ Messungen von Flugparametern entsprechen und f einer Funktion entspricht, die die Messungen von Flugparametern verbindet;
- einen Unterschritt (E12) des Vergleichens, der von einem Vergleichs-Untermodul (32) durchgeführt wird, der darin besteht, den Absolutwert des Ergebnisses mit mindestens einem vorbestimmten Schwellenwert zu vergleichen;
- einen ersten Unterschritt (E13) des Zuweisens, der von einem ersten Zuweisungs-Untermodul (33) durchgeführt wird, der darin besteht, die erste Gültigkeitsnote anhand des Vergleichs des Absolutwerts des Ergebnisses mit dem oder den vorbestimmten Schwellenwerten der Gleichung zuzuweisen.

4.  Verfahren nach Anspruch 3,
    **dadurch gekennzeichnet, dass** der Absolutwert des Ergebnisses im Unterschritt (E12) des Vergleichens mit einem vorbestimmten Schwellenwert verglichen wird, und dadurch, dass:

    - die zugewiesene erste Gültigkeitsnote gleich 1 ist, wenn der Absolutwert des Ergebnisses kleiner als der vorbestimmte Schwellenwert ist,
    - die zugewiesene erste Gültigkeitsnote gleich 0 ist, wenn der Absolutwert des Ergebnisses größer als der vorbestimmte Schwellenwert oder gleich diesem ist.

5.  Verfahren nach Anspruch 3,

    **dadurch gekennzeichnet, dass** der Absolutwert des Ergebnisses im Unterschritt (E12) des Vergleichens mit einem ersten vorbestimmten Schwellenwert und einem zweiten vorbestimmten Schwellenwert verglichen wird, wobei der erste vorbestimmte Schwellenwert kleiner als der zweite vorbestimmte Schwellenwert ist, wobei die zugewiesene erste Gültigkeitsnote gleich 1 ist, wenn der Absolutwert des Ergebnisses kleiner als der erste vorbestimmte Schwellenwert ist, die zugewiesene erste Gültigkeitsnote gleich 0 ist, wenn der Absolutwert des Ergebnisses größer als der zweite Schwellenwert oder gleich diesem ist, wobei die zugewiesene erste Gültigkeitsnote größer als 0 und kleiner als 1 ist, wobei sie einer fallenden monotonen Funktion von 1 bis 0 folgt, in dem Maße, wie der Absolutwert des Ergebnisses zunimmt, wenn der Absolutwert des Ergebnisses größer als der erste vorbestimmte Schwellenwert oder gleich diesem ist, und wenn der Absolutwert des Ergebnisses kleiner als der zweite vorbestimmte Schwellenwert ist.

6.  Verfahren nach Anspruch 1 oder 2, **dadurch gekennzeichnet, dass** der erste Schritt (E2) des Zuweisens Folgendes umfasst:

    - einen zweiten Unterschritt (E14) des Berechnens, der von einem zweiten Berechnungs-Untermodul (34) durchgeführt wird, der darin besteht, einen Statistikwert anhand eines Verfahrens zur Klassifizierung der Gleichung(en) der Messung(en) des oder der Flugparameter zu berechnen,
    - einen zweiten Unterschritt (E15) des Zuweisens, der von einem zweiten Zuweisungs-Untermodul (35) durchgeführt wird, der darin besteht, die erste Gültigkeitsnote unter Berücksichtigung des Statistikwerts zuzuweisen.

7.  Verfahren nach Anspruch 1,

    **dadurch gekennzeichnet, dass** die zweite Gültigkeitsnote, die beim dritten Unterschritt (E32) des Zuweisens zugewiesen wird, gleich 1 ist, wenn die Gleichung oder alle Gleichungen, die im ersten Unterschritt (E31) des Ermittelns ermittelt werden, eine zugewiesene erste Gültigkeitsnote gleich 1 aufweisen, und dadurch, dass die zweite Gültigkeitsnote, die beim dritten Unterschritt (E32) des Zuweisens zugewiesen wird, gleich 0 ist, wenn mindestens eine der Gleichungen, die im ersten Unterschritt (E31) des Ermittelns ermittelt werden, eine erste Gültigkeitsnote ungleich 1 aufweist.

8.  Verfahren nach Anspruch 1,
    **dadurch gekennzeichnet, dass** die zweite Gültigkeitsnote, die beim dritten Unterschritt (E32) des Zuweisens zugewiesen wird, gleich einem Ergebnis einer Kombination der ersten Gültigkeitsnote(n) der Gleichung(en), die im ersten Unterschritt (E31) des Ermittelns ermittelt werden, durch einen "UND"-Fuzzy-Operator ist.

9.  Verfahren nach Anspruch 2,

    **dadurch gekennzeichnet, dass** die zweite Gültigkeitsnote, die beim vierten Unterschritt (E34) des Zuweisens zugewiesen wird, für das oder die Störungsszenarien gleich 1 ist, bei denen das oder die Erfassungsmodule (2) zum Einsatz kommen, die dazu ausgebildet sind, die Messung(en) des oder der Flugparameter zu erfassen, die durch die Gleichung(en) verbunden werden, die im zweiten Unterschritt (E33) des Ermittelns ermittelt werden, wenn die erste(n) Gleichung(en), die im zweiten Unterschritt (E33) des Ermittelns ermittelt werden, eine zugewiesene erste Gültigkeitsnote gleich 1 aufweisen und wenn die zweite(n) Gleichung (en), die im zweiten Unterschritt (E33) des Ermittelns ermittelt werden, eine zugewiesene erste Gültigkeitsnote gleich 0 aufweisen,

und dadurch, dass die zweite Gültigkeitsnote, die beim vierten Unterschritt (E34) des Zuweisens zugewiesen wird, für das oder die Störungsszenarien gleich 0 ist, bei denen das oder die Erfassungsmodule (2) zum Einsatz kommen, die dazu ausgebildet sind, die Messung(en) des oder der Flugparameter zu erfassen, die durch die Gleichung(en) verbunden werden, die im zweiten Unterschritt (E33) des Ermittelns nicht ermittelt werden.

10. Verfahren nach Anspruch 2,

**dadurch gekennzeichnet, dass** für das oder die Störungsszenarien, bei denen ein oder mehrere Erfassungsmodule (2) zum Einsatz kommen, die dazu ausgebildet sind, die Messung (en) des oder der Flugparameter zu erfassen, die durch die erste(n) Gleichung(en) verbunden werden, die im zweiten Unterschritt (E33) des Ermittelns ermittelt werden, die zweite Gültigkeitsnote gleich einem Ergebnis einer Kombination der ersten Gültigkeitsnote(n), die der oder den Gleichungen zugewiesen sind, die die Flugparameter verbinden, durch einen "UND"-Fuzzy-Operator ist,
und dadurch, dass für das oder die Störungsszenarien, bei denen keins der Erfassungsmodule (2) zum Einsatz kommt, die dazu ausgebildet sind, die Messung(en) des oder der Flugparameter zu erfassen, die durch die Gleichung(en) verbunden werden, die im zweiten Unterschritt (E33) des Ermittelns ermittelt werden, die zweite Gültigkeitsnote gleich 0 ist.

11. Verfahren nach einem der Ansprüche 7 oder 9, **dadurch gekennzeichnet, dass** der Schritt (E4) des Bestimmens die folgenden Unterschritte umfasst, wobei jeder der folgenden Unterschritte für jede der Messungen des oder der Flugparameter durchgeführt wird:

- einen dritten Unterschritt (E41) des Ermittelns, der von einem dritten Ermittlungs-Untermodul (51) durchgeführt wird, der darin besteht, das oder die Störungsszenarien zu ermitteln, bei denen das Erfassungsmodul (2) zum Einsatz kommt, das dazu ausgebildet ist, die Flugparametermessung zu erfassen, deren zugewiesene zweite Gültigkeitsnote gleich 1 ist,
- einen ersten Unterschritt (E42) des Bestimmens, der von einem ersten Bestimmungs-Untermodul (52) durchgeführt wird, der darin besteht, die Gültigkeit der Flugparametermessung anhand des oder der Störungsszenarien zu bestimmen, die im dritten Unterschritt (E41) des Ermittelns ermittelt werden, wobei die Flugparametermessung gültig ist, wenn mindestens ein Störungsszenario vorliegt, dessen zugewiesene zweite Gültigkeitsnote gleich 1 ist, die Flugparametermessung ansonsten nicht gültig ist.

12. Verfahren nach einem der Ansprüche 8 oder 10, **dadurch gekennzeichnet, dass** der Schritt (E4) des Bestimmens einen zweiten Unterschritt (E43) des Bestimmens umfasst, der von einem zweiten Bestimmungs-Untermodul (53) für jede der Messungen des oder der Flugparameter durchgeführt wird, der darin besteht, die Gültigkeit der Flugparametermessung zu bestimmen, wobei die Gültigkeit der Flugparametermessung gleich einem Ergebnis einer Kombination der zweiten Gültigkeitsnoten, die den Störungsszenarien zugewiesen sind, bei denen das Erfassungsmodul (2) zum Einsatz kommt, das dazu ausgebildet ist, die Flugparametermessung zu erfassen, durch einen "ODER"-Fuzzy-Operator ist.

13. System zur Zusammenführung von Messungen von Flugparametern eines Luftfahrzeugs (AC), wobei die Messungen von Flugparametern durch mindestens eine Gleichung miteinander verbunden werden, wobei das System Folgendes umfasst:

- mindestens ein Erfassungsmodul (2), das dazu ausgebildet ist, mindestens eine Messung mindestens eines Flugparameters zu erfassen;
- ein erstes Zuweisungsmodul (3), das dazu ausgebildet ist, jeweils eine erste Gültigkeitsnote der Gleichung oder jeder der Gleichungen zuzuweisen, die die Messungen der Flugparameter miteinander verbinden, wobei die erste Gültigkeitsnote bestimmt wird, indem überprüft wird, ob die Messung (en) des oder der Flugparameter eine oder mehrere Lösungen der Gleichung(en) sind;
- ein zweites Zuweisungsmodul (4), das dazu ausgebildet ist, jeweils eine zweite Gültigkeitsnote einem oder mehreren Störungsszenarien zuzuweisen, wobei bei jedem der Störungsszenarien ein oder mehrere Erfassungsmodule (2) zum Einsatz kommen, wobei die zweite Gültigkeitsnote für ein betrachtetes Störungsszenario anhand der ersten Gültigkeitsnote(n) bestimmt wird, die der oder den Gleichungen zugewiesen sind, die die Messungen der Flugparameter verbinden, die von dem oder den Erfassungsmodulen (2) erfasst werden, die jeweils im betrachteten Störungsszenario zum Einsatz kommen;
- ein Bestimmungsmodul (5), das dazu ausgebildet ist, die Gültigkeit der Messung(en) des oder der Flugparameter anhand der zweiten Gültigkeitsnote(n) zu bestimmen;

- ein Konsolidierungsmodul (6), das dazu ausgebildet ist, die Messungen des oder der Flugparameter je nach der Gültigkeit der Messungen zu konsolidieren, die vom Bestimmungsmodul (5) bestimmt wird,

**dadurch gekennzeichnet, dass** es ferner ein Übertragungsmodul (7) umfasst, das dazu ausgebildet ist, die konsolidierte(n) Messung(en) des oder der Flugparameter an eine Benutzervorrichtung (8) zu übertragen, und dadurch, dass das zweite Zuweisungsmodul (4) die folgenden Untermodule umfasst:

- ein erstes Ermittlungs-Untermodul (41), das dazu ausgebildet ist, aus der oder den Gleichungen die Gleichung(en) zu ermitteln, die die Messungen von Flugparametern verbinden, die von dem oder den Erfassungsmodulen (2) erfasst werden, die im Störungsszenario zum Einsatz kommen, wobei das oder die ermittelten Erfassungsmodule (2) ferner dem oder den Erfassungsmodulen (2) entsprechen, deren Störungsszenario voraussetzt, dass das oder die Erfassungsmodule (2) nicht-fehlerhafte Messungen liefern,
- ein drittes Zuweisungs-Untermodul (42), das dazu ausgebildet ist, die zweite Gültigkeitsnote je nach der ersten Gültigkeitsnote der Gleichung(en) zuzuweisen, die durch das erste Ermittlungs-Untermodul (41) ermittelt werden.

14. System zur Zusammenführung von Messungen von Flugparametern eines Luftfahrzeugs (AC), wobei die Messungen von Flugparametern durch mindestens eine Gleichung miteinander verbunden werden, wobei das System Folgendes umfasst:

- mindestens ein Erfassungsmodul (2), das dazu ausgebildet ist, mindestens eine Messung mindestens eines Flugparameters zu erfassen;
- ein erstes Zuweisungsmodul (3), das dazu ausgebildet ist, jeweils eine erste Gültigkeitsnote der Gleichung oder jeder der Gleichungen zuzuweisen, die die Messungen der Flugparameter miteinander verbinden, wobei die erste Gültigkeitsnote bestimmt wird, indem überprüft wird, ob die Messung (en) des oder der Flugparameter eine oder mehrere Lösungen der Gleichung(en) sind;
- ein zweites Zuweisungsmodul (4), das dazu ausgebildet ist, jeweils eine zweite Gültigkeitsnote einem oder mehreren Störungsszenarien zuzuweisen, wobei bei jedem der Störungsszenarien ein oder mehrere Erfassungsmodule (2) zum Einsatz kommen, wobei die zweite Gültigkeitsnote für ein betrachtetes Störungsszenario anhand der ersten Gültigkeitsnote(n) bestimmt wird, die der oder den Gleichungen zugewiesen sind, die die Messungen der Flugparameter verbinden, die von dem oder den Erfassungsmodulen (2) erfasst werden, die jeweils im betrachteten Störungsszenario zum Einsatz kommen;
- ein Bestimmungsmodul (5), das dazu ausgebildet ist, die Gültigkeit der Messung(en) des oder der Flugparameter anhand der zweiten Gültigkeitsnote(n) zu bestimmen;
- ein Konsolidierungsmodul (6), das dazu ausgebildet ist, die Messungen des oder der Flugparameter je nach der Gültigkeit der Messungen zu konsolidieren, die vom Bestimmungsmodul (5) bestimmt wird,

**dadurch gekennzeichnet, dass** es ferner ein Übertragungsmodul (7) umfasst, das dazu ausgebildet ist, die konsolidierte(n) Messung(en) des oder der Flugparameter an eine Benutzervorrichtung (8) zu übertragen, und dadurch, dass das zweite Zuweisungsmodul (4) die folgenden Untermodule umfasst:

- ein erstes Ermittlungs-Untermodul (41), das dazu ausgebildet ist, aus der oder den Gleichungen die Gleichung(en) zu ermitteln, die die Messungen von Flugparametern verbinden, die von dem oder den Erfassungsmodulen (2) erfasst werden, die im Störungsszenario zum Einsatz kommen, wobei das oder die ermittelten Erfassungsmodule (2) ferner dem oder den Erfassungsmodulen (2) entsprechen, deren Störungsszenario voraussetzt, dass das oder die Erfassungsmodule (2) nicht-fehlerhafte Messungen liefern,
- ein drittes Zuweisungs-Untermodul (42), das darin besteht, die zweite Gültigkeitsnote je nach der ersten Gültigkeitsnote der Gleichung(en) zuzuweisen, die durch das erste Ermittlungs-Untermodul (41) ermittelt werden.

15. Luftfahrzeug,
**dadurch gekennzeichnet, dass** es ein System zur Zusammenführung von Messungen von Flugparametern eines Luftfahrzeugs wie jenes, das nach Anspruch 13 oder 14 spezifiziert ist, aufweist.

**Claims**

1. Method for fusing measurements of flight parameters of an aircraft, the flight parameter measurements being linked to one another by at least one equation, the method comprising the following steps:

- an acquisition step (E1), implemented by at least one acquisition module (2), consisting in acquiring at least one measurement of at least one flight parameter;
- a first assignment step (E2), implemented by a first assignment module (3), consisting in assigning respectively a first validity score to the equation or to each of the equations linking the measurements of the flight parameters to one another, the first validity score being determined by checking whether the measurement or measurements of the flight parameter or parameters are one or more solutions of the equation or equations;
- a second assignment step (E3), implemented by a second assignment module (4), consisting in assigning respectively a second validity score to one or more failure scenarios, each of the failure scenarios involving one or more acquisition modules (2), the second validity score for a failure scenario considered being determined from the first validity score or scores assigned to the equation or equations linking the measurements of the flight parameters acquired by the acquisition module or modules (2) involved respectively in the failure scenario considered;
- a determination step (E4), implemented by a determination module (5), consisting in determining the validity of the measurement or measurements of the flight parameter or parameters from the second validity score or scores;
- a consolidation step (E5), implemented by a consolidation module (6), consisting in consolidating the measurements of the flight parameter or parameters as a function of the validity of the measurements determined in the determination step (E4),

**characterized in that** it further comprises a transmission step (E6), implemented by a transmission module (7), consisting in transmitting the consolidated measurement or measurements of the flight parameter or parameters to a user device (8),
and **in that** the second assignment step (E3) comprises the following substeps, each of the following substeps being implemented for each of the failure scenarios:

- a first identification substep (E31), implemented by a first identification submodule (41), consisting in identifying, from among the equation or equations, the equation or equations linking the flight parameter measurements acquired by the acquisition module or modules (2) involved in the failure scenario, the identified acquisition module or modules (2) further corresponding to the acquisition module or modules (2) for which the failure scenario assumes that the acquisition module or modules (2) provide measurements that are not wrong,
- a third assignment substep (E32), implemented by a third assignment submodule (42), consisting in assigning the second validity score as a function of the first validity score of the equation or equations identified in the first identification substep (E31).

2. Method for fusing measurements of flight parameters of an aircraft, the flight parameter measurements being linked to one another by at least one equation, the method comprising the following steps:

- an acquisition step (E1), implemented by at least one acquisition module (2), consisting in acquiring at least one measurement of at least one flight parameter;
- a first assignment step (E2), implemented by a first assignment module (3), consisting in assigning respectively a first validity score to the equation or to each of the equations linking the measurements of the flight parameters to one another, the first validity score being determined by checking whether the measurement or measurements of the flight parameter or parameters are one or more solutions of the equation or equations;
- a second assignment step (E3), implemented by a second assignment module (4), consisting in assigning respectively a second validity score to one or more failure scenarios, each of the failure scenarios involving one or more acquisition modules (2), the second validity score for a failure scenario considered being determined from the first validity score or scores assigned to the equation or equations linking the measurements of the flight parameters acquired by the acquisition module or modules (2) involved respectively in the failure scenario considered;
- a determination step (E4), implemented by a determination module (5), consisting in determining the validity of the measurement or measurements of the flight parameter or parameters from the second validity score or scores;
- a consolidation step (E5), implemented by a consolidation module (6), consisting in consolidating the measurements of the flight parameter or parameters as a function of the validity of the measurements determined in the determination step (E4),

**characterized in that** it further comprises a transmission step (E6), implemented by a transmission module (7), consisting in transmitting the consolidated measurement or measurements of the flight parameter or parameters to a user device (8),
and **in that** the second assignment step (E3) comprises the following substeps:

- a second identification substep (E33), implemented by a second identification submodule (43), consisting in identifying, from among the equations, one or more first equations linking the flight parameter measurements acquired by the acquisition module or modules involved in the failure scenario, the identified acquisition module or modules (2) further corresponding to the acquisition module or modules (2) for which the failure scenario assumes that the acquisition module or modules provide measurements that are not wrong, and that one or more second equations linking the flight parameter measurements acquired by the acquisition module or modules involved in the failure scenario and for which the failure scenario assumes that the acquisition module or modules provide measurements that are wrong,
- a fourth assignment substep (E34), implemented by a fourth assignment submodule (44), consisting in assigning the second validity score to each of the failure scenarios from the equations identified in the second identification substep (E33).

3. Method according to Claim 1 or Claim 2, **characterized in that** the first assignment step (E2) comprises the following substeps, each of the following substeps being implemented for each of the equations:

- a first computation substep (E11), implemented by a first computation submodule (31), consisting in computing an absolute value of a result of the equation without second member from the measurement or measurements of the flight parameter or parameters involved in the equation, the equation without second member taking the from $f(x_1, \cdots, x_i, \cdots, x_n)=0$ in which $x_1, \cdots x_i, \cdots, x_n$ correspond to flight parameter measurements and $f$ corresponds to a function linking the flight parameter measurements;
- a comparison substep (E12), implemented by a comparison submodule (32), consisting in comparing the absolute value of the result with at least one predetermined threshold value;
- a first assignment substep (E13), implemented by a first assignment submodule (33), consisting in assigning the first validity score to the equation from the comparison of the absolute value of the result with the predetermined threshold value or values.

4. Method according to Claim 3,
**characterized in that** the absolute value of the result is compared in the comparison substep (E12) with a predetermined threshold value, and **in that**:

- the first validity score assigned is equal to 1 if the absolute value of the result is below the predetermined threshold value,
- the first validity score assigned is equal to 0 if the absolute value of the result is above or equal to the predetermined threshold value.

5. Method according to Claim 3,

**characterized in that** the absolute value of the result is compared in the comparison substep (E12) with a first predetermined threshold value and a second predetermined threshold value, the first predetermined threshold value being lower than the second predetermined threshold value,
the first validity score assigned being equal to 1, if the absolute value of the result is below the first predetermined threshold value,
the first validity score assigned being equal to 0 if the absolute value of the result is above or equal to the second threshold value,
the first validity score assigned being greater than 0 and less than 1 according to a monotonic function descending from 1 to 0 as the absolute value of the result increases, if the absolute value of the result is above or equal to the first predetermined threshold value and if the absolute value of the result is below the second predetermined threshold value.

6. Method according to Claim 1 or Claim 2, **characterized in that** the first assignment step (E2) comprises:

- a second computation substep (E14), implemented by a second computation submodule (34), consisting in computing a statistical value, from a classification method, of the equation or equations and of the measurement or measurements of the flight parameter or parameters,
- a second assignment substep (E15), implemented by a second assignment submodule (35), consisting in assigning the first validity score by taking account of the statistical value.

7. Method according to Claim 1,

**characterized in that** the second validity score assigned in the third assignment substep (E32) is equal to 1 if the equation or all the equations identified in the first identification substep (E31) have a first validity score assigned equal to 1,
and **in that** the second validity score assigned in the third assignment substep (E32) is equal to 0 if at least one of the equations identified in the first identification substep (E31) has a first validity score different from 1.

8. Method according to Claim 1,
**characterized in that** the second validity score assigned in the third assignment substep (E32) is equal to a result of a combination by a fuzzy "AND" operator of the first validity score or scores of the equation or equations identified in the first identification substep (E31).

9. Method according to Claim 2,
**characterized in that** the second validity score assigned in the fourth assignment substep (E34) is equal to 1 for the failure scenario or scenarios involving the acquisition module or modules (2) configured to acquire the measurement or measurements of the flight parameter or parameters linked by the equation or equations identified in the second identification substep (E33), if the first equation or equations identified in the second identification substep (E33) have a first validity score assigned equal to 1 and if the second equation or equations identified in the second identification substep (E33) have a first validity score assigned equal to 0, and **in that** the second validity score assigned in the fourth assignment substep (E34) is equal to 0 for the failure scenario or scenarios involving the acquisition module or modules (2) configured to acquire the measurement or measurements of the flight parameter or parameters linked by the equation or equations which are not identified in the second identification substep (E33) .

10. Method according to Claim 2,

**characterized in that**, for the failure scenario or scenarios involving one or more acquisition modules (2) configured to acquire the measurement or measurements of the flight parameter or parameters linked by the first equation or equations identified in the second identification substep (E33), the second validity score is equal to a result of a combination by a fuzzy "AND" operator of the first validity score or scores assigned to the first equation or equations linking the flight parameters,
and **in that**, for the failure scenario or scenarios not involving any of the acquisition modules (2) configured to acquire the measurement or measurements of the flight parameter or parameters linked by the equation or equations identified in the second identification substep (E33), the second validity score is equal to 0.

11. Method according to either one of Claims 7 and 9, **characterized in that** the determination step (E4) comprises the following substeps, each of the following substeps being implemented for each of the measurements of the flight parameter or parameters:

- a third identification substep (E41), implemented by a third identification submodule (51), consisting in identifying the failure scenario or scenarios involving the acquisition module (2) configured to acquire the flight parameter measurement, for which the second validity score assigned is equal to 1,
- a first determination substep (E42), implemented by a first determination submodule (52), consisting in determining the validity of the flight parameter measurement from the failure scenario or scenarios identified in the third identification substep (E41), the flight parameter measurement being valid if there is at least one failure scenario for which the second validity score assigned is equal to 1, otherwise the flight parameter measurement is not valid.

12. Method according to either one of Claims 8 and 10, **characterized in that** the determination step (E4) comprises a second determination substep (E43), implemented by a second determination submodule (53) for each of the measurements of the flight parameter or parameters, consisting in determining the validity of the flight parameter measurement, the validity of the flight parameter measurement being equal to a result of a combination by a fuzzy "OR" operator of the second validity scores assigned to the failure scenarios involving the acquisition module (2) configured to acquire the flight parameter measurement.

**13.** System for fusing measurements of flight parameters of an aircraft (AC), the flight parameter measurements being linked to one another by at least one equation, the system comprising:

- at least one acquisition module (2) configured to acquire at least one measurement of at least one flight parameter;
- a first assignment module (3) configured to assign respectively a first validity score to the equation or to each of the equations linking the measurements of the flight parameters to one another, the first validity score being determined by checking whether the measurement or measurements of the flight parameter or parameters are one or more solutions of the equation or equations;
- a second assignment module (4) configured to assign respectively a second validity score to one or more failure scenarios, each of the failure scenarios involving one or more acquisition modules (2), the second validity score for a failure scenario considered being determined from the first validity score or scores assigned to the equation or equations linking the measurements of the flight parameters acquired by the acquisition module or modules (2) involved respectively in the failure scenario considered;
- a determination module (5) configured to determine the validity of the measurement or measurements of the flight parameter or parameters from the second validity score or scores;
- a consolidation module (6) configured to consolidate the measurements of the flight parameter or parameters as a function of the validity of the measurements determined by the determination module (5), **characterized in that** it further comprises a transmission module (7) configured to transmit the consolidated measurement or measurements of the flight parameter or parameters to a user device (8),

and **in that** the second assignment module (4) comprises the following submodules:

- a first identification submodule (41), configured to identify, from among the equation or equations, the equation or equations linking the flight parameter measurements acquired by the acquisition module or modules (2) involved in the failure scenario, the identified acquisition module or modules (2) further corresponding to the acquisition module or modules (2) for which the failure scenario assumes that the acquisition module or modules (2) provide measurements that are not wrong,
- a third assignment submodule (42), configured to assign the second validity score as a function of the first validity score of the equation or equations identified by the first identification submodule (41).

**14.** System for fusing measurements of flight parameters of an aircraft (AC), the flight parameter measurements being linked to one another by at least one equation, the system comprising:

- at least one acquisition module (2) configured to acquire at least one measurement of at least one flight parameter;
- a first assignment module (3) configured to assign respectively a first validity score to the equation or to each of the equations linking the measurements of the flight parameters to one another, the first validity score being determined by checking whether the measurement or measurements of the flight parameter or parameters are one or more solutions of the equation or equations;
- a second assignment module (4) configured to assign respectively a second validity score to one or more failure scenarios, each of the failure scenarios involving one or more acquisition modules (2), the second validity score for a failure scenario considered being determined from the first validity score or scores assigned to the equation or equations linking the measurements of the flight parameters acquired by the acquisition module or modules (2) involved respectively in the failure scenario considered;
- a determination module (5) configured to determine the validity of the measurement or measurements of the flight parameter or parameters from the second validity score or scores;
- a consolidation module (6) configured to consolidate the measurements of the flight parameter or parameters as a function of the validity of the measurements determined by the determination module (5), **characterized in that** it further comprises a transmission module (7) configured to transmit the consolidated measurement or measurements of the flight parameter or parameters to a user device (8),

and **in that** the second assignment module (4) comprises the following submodules:

- a first identification submodule (41), configured to identify, from among the equation or equations, the equation or equations linking the flight parameter measurements acquired by the acquisition module or modules (2) involved in the failure scenario, the identified acquisition module or modules (2) further corresponding to the acquisition module or modules (2) for which the failure scenario assumes that the acquisition module or modules (2) provide measurements that are not wrong,
- a further assignment submodule (42), configured to assign the second validity score as a function of the first validity score of the equation or equations identified by the first identification submodule (41).

**15.** Aircraft,
**characterized in that** it comprises a system for fusing measurements of flight parameters of an aircraft, such as that specified under Claim 13 or Claim 14.

Fig. 1

Fig. 2

Fig. 3

**EP 3 553 617 B1**

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 20150148997 A